(19)

Europäisches
Patentamt

European
Patent Office

Office européen
des brevets

(11)     EP 2 592 823 A2

(12)                          EUROPEAN PATENT APPLICATION

(43) Date of publication:
     15.05.2013 Bulletin 2013/20

(51) Int Cl.:
     *H04N 5/232* (2006.01)

(21) Application number: 13154074.2

(22) Date of filing: 10.09.2012

(84) Designated Contracting States:
     AL AT BE BG CH CY CZ DE DK EE ES FI FR GB
     GR HR HU IE IS IT LI LT LU LV MC MK MT NL NO
     PL PT RO RS SE SI SK SM TR
     Designated Extension States:
     BA ME

(30) Priority: 12.10.2011  JP 2011224814
              11.01.2012  JP 2012002929

(62) Document number(s) of the earlier application(s) in
     accordance with Art. 76 EPC:
     12183748.8 / 2 582 128

(71) Applicant: CANON KABUSHIKI KAISHA
     Ohta-ku
     Tokyo 146-8501 (JP)

(72) Inventor: Yahata, Kazuhiro
         Ohta-ku, Tokyo (JP)

(74) Representative: Williamson, Brian
         Canon Europe Ltd
         European Patent Department
         3 The Square
         Stockley Park
         Uxbridge, Middlesex UB11 1ET (GB)

Remarks:
     This application was filed on 05-02-2013 as a
     divisional application to the application mentioned
     under INID code 62.

(54)     **Image-capturing device**

(57)     If a zoom magnification ratio of the image is changed after shooting, it is impossible to match brightness, amount of noise, exposure time between angles of view due to difference in light gathering ability of a camera. One or more first image-capturing unit groups (1324 to 1369) having a first angle of view, among the image-capturing units, are arranged in a region wider than one or more second image-capturing unit groups (1301 to 1304) having a second angle of view wider than the first angle of view.

FIG.13

**Description**

BACKGROUND OF THE INVENTION

Field of the Invention

The present invention relates to an image-capturing device having a plurality of image-capturing units.

Description of the Related Art

There is proposed a method of changing, after taking a photograph, focus, diaphragm, zoom magnification ratio, or the like of the photographic image. For example, "High performance imaging using large camera arrays", ACM Transactions on Graphics - Proceedings of ACM SIGGRAPH 2005, discloses a technique of generating, from image data captured by a multiple camera including a plurality of small cameras having a deep depth of field, image data having a shallower depth of field.

When performing a zooming process in such a multiple camera, the simplest way is to provide individual small cameras with zoom optical systems, respectively. However, providing a zoom optical system to each and every small camera is very expensive. On the other hand, Japanese Patent Laid-Open No. 2005-109623 discloses a method which omits zooming with the optical system and realizes an inexpensive zooming process, by using a multiple camera including a plurality of single focus cameras respectively having different angles of view, and switching images to be used according to the angle of view. In other words, multiple cameras with different angles of view can be regarded as a single zoom camera according to the technique of Japanese Patent Laid-Open No. 2005-109623.

However, it turns out that light gathering ability of the camera differs for respective angles of view. In this occasion, there is a problem that brightness or amount of noise differs among angles of view when photographs are taken by matching an exposure time regardless of the angle of view. In addition, if an exposure time is changed for respective angles of view so as to match the brightness, there is a problem that camera shake or motion shake may occur, or expected photographs cannot be acquired inherently in other zooms due to difference in the exposure time and thus it is virtually impossible to perform the zooming process after shooting.

SUMMARY OF THE INVENTION

The present invention in its first aspect provides an image-capturing device as specified in claims 1, 2, 5, 6, 7 and 8.

The present invention in its second aspect provides an image processing apparatus as specified in claims 3, 4 and 9 to 13.

The present invention in its third aspect provides an image processing method as specified in claims 14 to 16, 19 and 20.

The present invention in its fourth aspect provides a method of manufacturing an image-capturing device as specified in claims 17 and 18.

The present invention in its fifth aspect provides an image-capturing device as specified in claims 21 to 30.

According to the present invention, susceptibility to the amount of noise and exposure time can be reduced when changing the zoom magnification ratio for a photographic image after shooting.

Further features of the present invention will become apparent from the following description of embodiments (with reference to the attached drawings). Each of the embodiments of the present invention described below can be implemented solely or as a combination of a plurality of the embodiments or features thereof where necessary or where the combination of elements or features from individual embodiments in a single embodiment is beneficial.

BRIEF DESCRIPTION OF THE DRAWINGS

Fig. 1 shows an appearance of an image-capturing device in a first embodiment of the present invention;

Fig. 2 is a block diagram showing a configuration of the image-capturing device in the embodiment of the present invention;

Fig. 3 is a block diagram showing a configuration of an image-capturing unit in the embodiment of the present invention;

Fig. 4 is a flow chart showing an image-capturing operation in the first embodiment of the present invention;

Fig. 5 is a flow chart showing a process of changing the zoom after shooting in the first embodiment of the present invention;

Figs. 6A and 6B are explanatory diagrams of the concept of image synthesis in the first embodiment of the present invention;

Fig. 7 shows an image synthesis in the first embodiment of the present invention;

Fig. 8 shows an appearance of an image-capturing device in a second embodiment of the present invention;

Fig. 9 is a flow chart showing an operation when changing the setting of the image-capturing unit in the second embodiment of the present invention;

Fig. 10 shows a data flow of an image-capturing parameter calculation process in the second example of the present invention;

Fig. 11 shows an appearance of an image-capturing device in a third embodiment of the present invention;

Fig. 12 shows a relation between the angle of view of each image-capturing unit and the output image angle of view in the third embodiment of the present invention;

Fig. 13 shows an appearance of an image-capturing device in a fourth embodiment of the present invention;

Fig. 14 is a block diagram showing a configuration of the image-capturing device in the fourth embodiment of the present invention;

Fig. 15 is a block diagram showing a configuration of the image-capturing unit in the fourth embodiment of the present invention;

Fig. 16 is a flow chart showing an image-capturing operation in the fourth embodiment of the present invention;

Fig. 17 is a flow chart showing a process of changing the zoom after shooting in the fourth embodiment of the present invention;

Figs. 18A to 18C show a relation between the angle of view and the pupil;

Fig. 19 shows an effective size of pupil for respective angles of view of a camera array;

Fig. 20 shows an arrangement of image-capturing units to which the fourth embodiment of the present invention can be applied; and

Fig. 21 shows an arrangement of the image-capturing unit in the first embodiment of the present invention.

## DESCRIPTION OF THE EMBODIMENTS

[First embodiment]

First, the outline of an Embodiment 1 will be described. The Embodiment 1 relates to adjusting the balance of brightness of image data for respective angles of view captured by each image-capturing unit by providing a larger number of telescopic image-capturing units than wide-angle image-capturing units, for example.

<Configuration of image-capturing device>

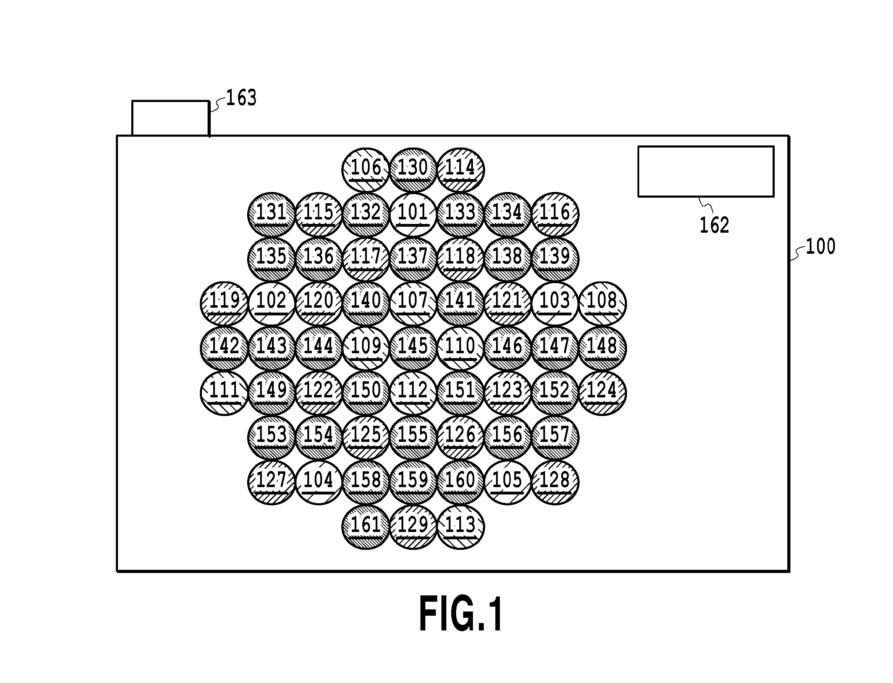

Fig. 1 shows a general appearance of an image-capturing device 100 of the Embodiment 1. The image-capturing device 100 shown in Fig. 1 is a so-called camera array (as known as camera array system, multiple lens camera, and the like) having 61 image-capturing units 101 to 161 on the front side (subject side). Different hatchings of the image-capturing units 101 to 161 shown in Fig. 1 indicate difference of angles of view as described below. The image-capturing device 100 further has a flash 162 and a shoot button 163. In addition, the image-capturing device 100 has an operation unit and a display unit or the like on its back side, although not shown in Fig. 1. Although a case of having 61 image-capturing units will be described below in the present embodiment, three or more image-capturing units will do, without the number of image-capturing units being limited to 61. The reason for preparing three or more image-capturing units is to provide a larger number of image-capturing units having one angle of view than the number of image-capturing units having the other angle of view, if there are image-capturing units having two types of angles of view, for example. In addition, it suffices that the plurality of image-capturing units is arranged so that they can photograph a same subject or an approximately the same region at an approximately same time. The phrases "approximately the same region" and "approximately the same time" indicate a range in which an image similar to the image data captured by other image-capturing units is acquired, when image data captured by a plurality of image-capturing units is synthesized, for example. Although it is preferred that the image-capturing units are arranged on a same plane as shown in Fig. 1, and the optical axes of the image-capturing units are parallel for easier image processing, the present embodiment is not limited to such an arrangement. Further details of the configuration and arrangement of the image-capturing units according to the present embodiment will be described below.

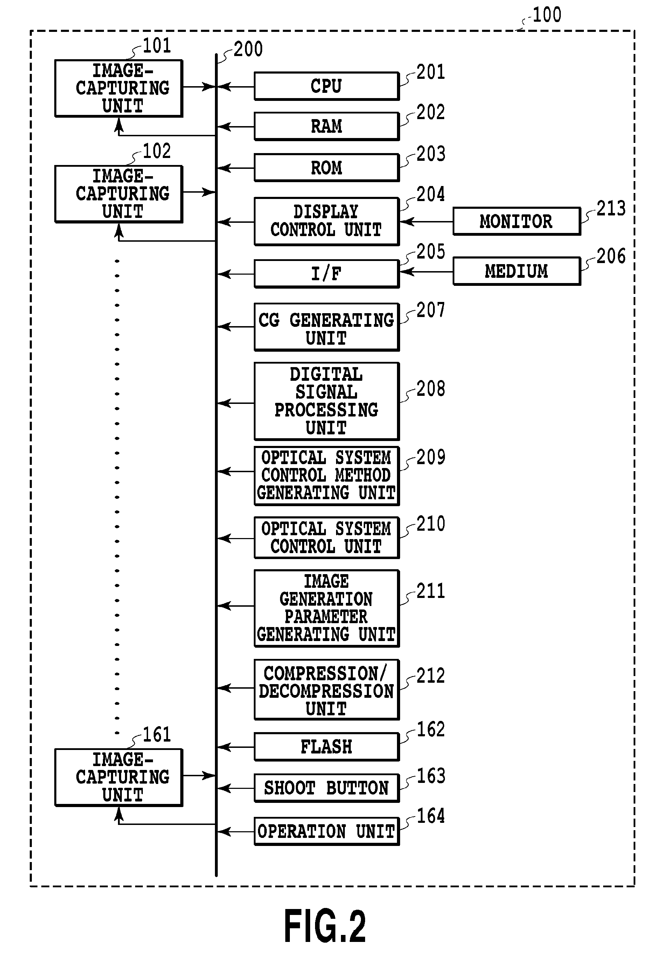

Fig. 2 is a block diagram showing a configuration of the image-capturing device 100. A CPU 201 uses a RAM 202 as a work memory to execute the OS and various programs stored in a ROM 203. In addition, the CPU 201 controls each component of the image-capturing device 100 via a system bus 200. The RAM 202 stores image-capturing parameters or the like, which are information indicating the status of the image-capturing units 101 to 161 such as settings of focus, diaphragm, or the like, indicating the control result of the image-capturing optical system. The ROM 203 stores camera design parameters or the like indicating relative positional relation of the image-capturing units 101 to 161 and pixel pitches of image-capturing elements of respective image-capturing units, receiving efficiency of light energy, and angles of view (solid angles) at which the image-capturing units can capture images. Although not shown, camera design parameters of the image-capturing unit may be stored in the ROMs of the image-capturing units 101 to 161, respectively.

The CPU 201 controls a computer graphics (CG) generating unit 207 and a display control unit 204 to display a user interface (UI) on a monitor 213. In addition, the CPU 201 receives a user instruction via the shoot button 163 and the operation unit 164. The CPU 201 then can set shooting conditions such as subject distance, focal distance, diaphragm, exposure time, and light emission of flash at the time of image-capturing, according to the user instruction. In addition, the CPU 201 can instruct image-capturing and perform display setting of captured images according to the user instruction. The CG generating unit 207 generates data such as characters and graphics for realizing the UI.

When instructed to perform shooting by the user, the CPU 201 acquires a control method of the optical system corresponding to the user instruction from an optical system control method generating unit 209. Next, the CPU 201 instructs the optical system control unit 210 to perform image-capturing, based on the acquired control method of the optical system. Upon receiving the image-capturing instruction, the optical system control unit 210 performs control of the image-capturing optical system such as focusing, adjusting the diaphragm, opening or closing the shutter, or the like. In addition, the optical system control unit 210 stores, in the RAM 202, image-capturing parameters which are information indicating the status of the image-capturing units 101 to 161 such as focus setting, diaphragm setting, or the like indicating the control result of the image-capturing optical system. Instead of controlling the image-capturing optical system of respective image-capturing units 101 to 161 by a single optical system control unit 210, respective image-capturing units 101 to 161 may be provided with an optical system control unit which can communicate with the CPU 201.

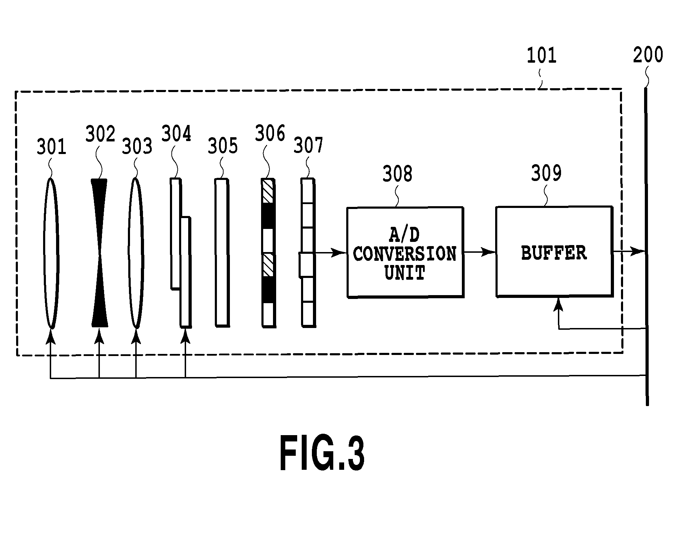

The image-capturing units 101 to 161 respectively receive light from a subject in an imaging sensor 307 such as a CCD or a CMOS. Details will be described below in relation with Fig. 3. The image-capturing units 101 to 161 temporarily retain, in buffer memories within the image-capturing units 101 to 161, the captured data (referred to as RAW data in the following) resulting from performing analog-to-digital (A/D) conversion on the analog signal output from the imaging sensor 307. The RAW data retained in the buffer memories are stored in a predetermined region of the RAM 202 in sequence by control of the CPU 201.

A digital signal processing unit 208 performs a development process to generate image data from a plurality of RAW data (referred to as RAW data set in the following) stored in a predetermined region of the RAM 202. In addition, the digital signal processing unit 208 stores the RAW data set and generated image data in a predetermined region of the RAM 202. The development process includes a synthesis process of synthesizing a plurality of RAW data, a demosaicing process, a white balance process, a gamma process, and a noise reduction process. In addition, the digital signal processing unit 208 can perform a process of changing the zoom magnification ratio for image data after shooting, and generating image data after the change. The generated image data has added thereto parameters at the time of the development process (referred to as image generation parameters in the following) indicating focal distance, zoom magnification ratio, depth of field, or the like. The image generation parameters are generated based on values specified by the user, for example. In addition, the initial setting value can be used as the image generation parameter at the time of the first developing, for example. In addition, whereas at least image-capturing parameters are added to the RAW data set, camera design parameters may be added thereto, considering a development process using an external image processing apparatus.

The CPU 201 controls the display control unit 204 to display the image data stored in a predetermined region of the RAM 202 on the monitor 213. A compression/decompression unit 212 performs an encoding process of converting the image data stored in a predetermined region of the RAM 202 into a format such as JPEG or MPEG. In addition, the compression/decompression unit 212 performs a lossless compressing process of the RAW data set, if necessary.

An interface (I/F) 205 has a function of reading from and writing into a recording medium 206 such as, for example, a memory card, a USB memory or the like, and a function of connecting to wired or wireless networks. The I/F 205 outputs JPEG or MPEG format image data and the RAW data set stored in the RAM 202, for example, to an external medium or a server device, or inputs various data from an external recording medium or a server device, according to instructions of the CPU 201.

An image generation parameter generating unit 211 generates image generation parameters required for the development process in the digital signal processing unit 208.

Although the image-capturing device 100 shown in Fig. 2 has the image-capturing units 101 to 161 and other components integrated therein as a single unit, the image-capturing units 101 to 161 and other components (image processing apparatus) may be separated. In such a case, the image-capturing units 101 to 161 and the image processing apparatus may be respectively provided with a serial bus I/F such as USB or IEEE 1394 or a communication unit such as a wireless network card, for example, to perform transmission and reception of control signals, or input and output of data via the communication unit.

<Configuration of each image-capturing unit>

The block diagram of Fig. 3 shows a configuration of the image-capturing units 101 to 161. Although Fig. 3 shows a configuration of the image-capturing unit 101, other image-capturing units 102 to 161 have an approximately similar configuration. However, setting of angles of view, focuses, diaphragms or the like of the image-capturing units 101 to 161 need not be configured to be totally identical. Details will be described below.

Light from a subject passes through a focus lens group 301, an diaphragm 302, a fixed lens group 303, a shutter 304, an infrared cut filter 305, and a color filter 306 to form an image on the imaging sensor 307 such as a CMOS sensor or a CCD. An analog-to-digital conversion unit 308 performs analog-to-digital conversion of analog signals output from the imaging sensor 307. A buffer 309 temporarily stores the RAW data output from the analog-to-digital conversion unit 308, and transfers the RAW data to the RAM 202 via the system bus 200 according to a request of the CPU 201.

The arrangement of the lens group and the diaphragm shown in Fig. 3 is an example and may be replaced by different arrangements. For example, a part or all of the image-capturing units need not be provided with the fixed lens group 303 for improving lens performance such as telecentricity.

<Configurations of image-capturing units and combination thereof>

In order to provide an inexpensive zoom function, the angles of view of the image-capturing units in the present embodiment are not all the same. For example, in the camera array having 61 lenses shown in Fig. 1, there are four types of angles of view of the image-capturing units 101 to 161, of which the image-capturing units 101 to 105, the image-capturing units 106 to 113, the image-capturing units 114 to 129, and the image-capturing units 130 to 161 have same angles of view, respectively. However, not all the image-capturing units 101 to 161 necessarily have an imaging sensor of a same size, even if their angles of view are identical. In other words, even if there are imaging sensors of different sizes, angles of view are the same according to distances which can be covered by the focal distance of the image-capturing unit. It is preferred that image-capturing units with a same angle of view have a same number of pixels to simplify image processing. In addition, it is assumed in the present embodiment that sizes of entrance pupils ($\approx$ diaphragm seen from front of lens) of the optical systems associated with the image-capturing units 101 to 161 are designed to be approximately the same.

In the present embodiment, the image-capturing units 101 to 161 are configured to have approximately the same total light gathering abilities for respective angles of view, in order to simultaneously adjust brightness, noise, and exposure time among images captured by image-capturing units having different angles of view. For example, the image-capturing units 101 to 105 and the image-capturing units 106 to 113 are configured so that their total light gathering abilities are approximately the same. In addition, the same goes for other image-capturing unit groups. Specifically, the image-capturing units 101 to 161 are configured to have approximately the same total light gathering abilities in terms of evaluation values $E_j$ calculated by the following equation for respective angles of view, with j being an index of an angle of view.

$$E_j = N_j\Omega_j \qquad\qquad \text{Equation (1)}$$

Here, $N_j$ is the number of image-capturing units having an angle of view j. $\Omega_j$ is a solid angle of a region in which an image-capturing unit with an angle of view j performs image-capturing. Although it is desirable that the solid angle $\Omega_j$ be directly measured, it may be calculated by the following equation.

$$\Omega_j = \iint \frac{f_{j,i}^2}{\left(f_{j,i}^2 + x^2 + y^2\right)} dxdy \qquad\qquad \text{Equation (2)}$$

Here, $f_{j,i}$ is a focal distance of an image-capturing unit i having an angle of view j, and x, y are coordinates on the imaging sensor associated with the image-capturing unit. The integration range is the size of the imaging sensor. Since solid angles of image-capturing units having different sizes of imaging sensors are equal as long as their angles of view are the same, it suffices to calculate a solid angle of any one of the plurality of image-capturing units having an angle of view j. If there exists distortion in the optical system associated with the image-capturing unit, the solid angle can be calculated by substitution to a coordinate system x', y' after having corrected the distortion. In addition, if there exists a region not used for image synthesis as a result of correcting distortion, the region can be omitted from the integration range.

Since there are four types of angles of view in the example shown in Fig. 1, four types of evaluation values $E_j$ are also calculated. The evaluation value $E_j$ is a quantity proportional to the total light energy being received per unit time by a plurality of image-capturing units having the angle of view j. Accordingly, if $E_j$ are equal regardless of the angle of view j, the power of shot noise, which is the main cause of noise, becomes approximately the same. Therefore, irregularity of noise among images having different angles of view also becomes approximately the same.

Although it is desirable that respective image-capturing units are configured so that their evaluation values $E_j$ are as equal as possible, there may be a case where it is difficult to match the evaluation values $E_j$ completely. Accordingly, it may be necessary to define a tolerance of variation of $E_j$. If, for example, it is desired to suppress the difference of SN among the angles of view to about 20%, respective image-capturing units are designed so that the difference between the evaluation values $E_j$ is suppressed to about 40%, since there is a relation such that if the signal value doubles the noise value increases by $\sqrt{2}$ times. More preferably, the image-capturing unit may be configured so that the difference of $E_j$ is smaller than the width of variation of the exposure time adjustable by the user. In other words, if the user can control the exposure time by a step of 1/3 notch, it is desirable that the ratio between the evaluation values $E_j$ and $E_k$ for angles of view j and k satisfy the next equation.

$$2^{-1/3} \leq \frac{E_k}{E_j} \leq 2^{1/3} \qquad \text{Equation (3)}$$

As thus described, light gathering ability at respective angles of view can be made equal by adjusting the number of image-capturing units so that evaluation value of respective angles of view become approximately the same. Specifically, the number of image-capturing units in a first image-capturing unit group having a first angle of view is configured to be smaller than the number of image-capturing units of a second image-capturing unit group having a second angle of view which is smaller than the angle of view associated with the first image-capturing unit group. For example, evaluation values of respective angles of view can be made approximately the same by providing a larger number of telescopic image-capturing units than the number of wide-angle image-capturing units. Adjustment of the number of image-capturing units so that the evaluation values at such angles of view become approximately the same can be performed when manufacturing the image-capturing devices, for example.

<Image-capturing operation>

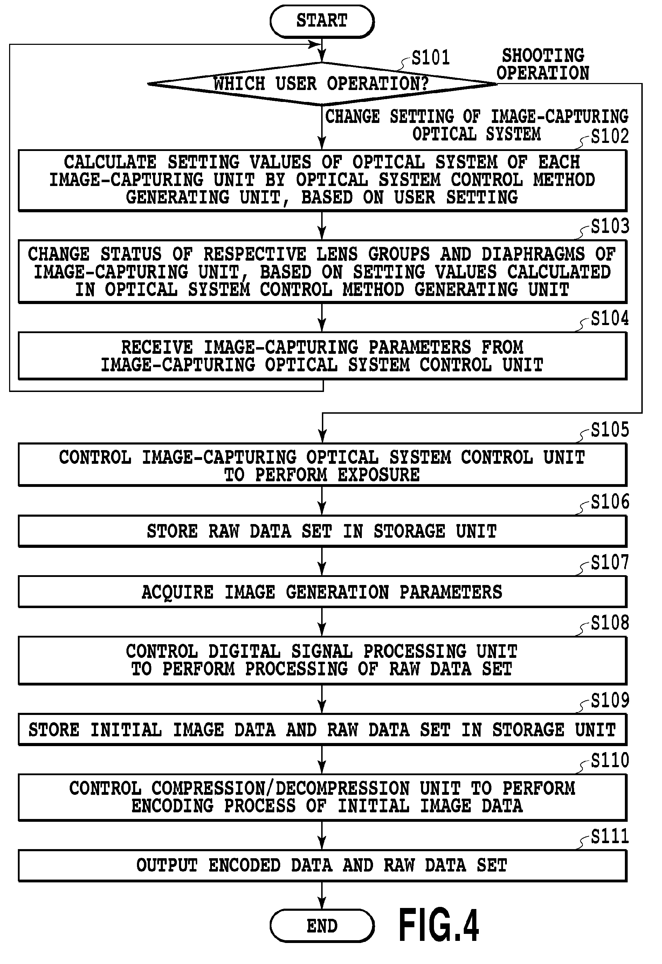

Fig. 4 is a flow chart showing an exemplary image-capturing operation of the Embodiment 1. It is assumed that evaluation values of respective angles of view are designed to be approximately the same as described above. The process shown in Fig. 4 is realized by reading and executing, by the CPU 201, a program stored in the ROM 203, for example. When the user operates the operation unit 164 and the shoot button 163, the image-capturing operation shown in Fig. 4 is started. The CPU 201 receives user instructions via the operation unit 164 and the shoot button 163 and determines the operation of the user (step S101).

When the user operates the operation unit 164 to change the setting of the image-capturing optical system such as focus and diaphragm, the CPU 201 acquires, from the optical system control method generating unit 209, a control method of the optical system associated with each image-capturing unit (step S102). At step S102, the optical system control method generating unit 209 calculates, based on an operation mode preliminarily set by the user, the control method of the optical system of the image-capturing unit. For example, in an operation mode in which all the image-capturing units perform shooting in accordance with a same focus, the optical system control method generating unit 209 sets the focus of all the image-capturing units to a value specified by the user. On the contrary, in an operation mode in which a plurality of image-capturing units respectively performs shooting in accordance with different focuses, the optical system control method generating unit 209 calculates a setting value other than that specified by the user so as to maintain the focus of the image-capturing unit. The optical system control method generating unit 209 performs a similar operation with regard to the diaphragm. As described in the foregoing, the size of the entrance pupil ($\approx$diaphragm seen from front of lens) of the image-capturing unit is designed to be approximately the same in the present embodiment. If, for example, the user has changed the value of diaphragm at step S102 in the case of the operation mode in which all the image-capturing units perform shooting in accordance with a same diaphragm, the evaluation values for respective angles of view become approximately the same, since the sizes of the entrance pupils of all the image-capturing units vary in a similar manner. On the other hand, in the case of the operation mode in which a plurality of image-capturing units respectively performs shooting in accordance with different focuses, the size of the entrance pupil is changed when the user changes the value of diaphragm. In such a case, a process of adjusting the diaphragm of the image-capturing unit based on the calculated evaluation value is performed as will be explained in an Embodiment 2 described below. Detailed description of the processing will be provided in the Embodiment 2.

The CPU 201 controls the optical system control unit 210 based on the calculated diaphragm value and the value of focus to change the status of respective lens groups and diaphragms of the image-capturing units 101 to 161 (step S103). The optical system control unit 210 transmits, to the CPU 201, image-capturing parameters indicating the status of respective lens groups and diaphragms of the image-capturing units 101 to 161, and the CPU 201 stores the received image-capturing parameters in a predetermined region of the RAM 202 (step S104).

When the user presses the shoot button 163 about halfway down, autofocus for automatically setting the focus and autoexposure for automatically setting the diaphragm to adjust the amount of exposure are performed, based on the setting by the user. This is also a change operation of the image-capturing optical system since the focus and diaphragm of the image-capturing unit are automatically changed by the operation. The process described for steps S102 to S104 is also performed when performing autoexposure.

When the user presses the shoot button 163 completely down, the CPU 201 determines at step S101 that the shooting operation has been performed. The CPU 201 controls the optical system control unit 210 to open the shutter 304 of the image-capturing units 101 to 161 for a preliminarily set time and expose the imaging sensor 307 (step S105).

Subsequently, the CPU 201 controls the buffer 309 of the image-capturing units 101 to 161 to store the RAW data set in a predetermined region of the RAM 202 (step S106).

Next, the CPU 201 controls the image generation parameter generating unit 211 to acquire image generation parameters such as zoom magnification ratio, focal distance, depth of field or the like, and store them in a predetermined region of the RAM 202 (step S107). The CPU 201 then controls the digital signal processing unit 208 to perform the development process of the RAW data set (step S108).

The digital signal processing unit 208 receives RAW data sets, image-capturing parameters, camera design parameters and image generation parameters, and performs the development process based on these data and parameters to generate image data (referred to as initial image data in the following). Subsequently, the digital signal processing unit 208 adds image-capturing parameters (camera design parameters, if necessary) to the RAW data set, and also adds the image generation parameters used for the development process to the initial image data. The CPU 201 stores the initial image data and the RAW data set output by the digital signal processing unit 208 in a predetermined region of the RAM 202 (step S109).

Next, the CPU 201 controls the compression / decompression unit 212 to perform an encoding process on the initial image data (step S110). The CPU 201 then controls the I/F 205 to output the encoded initial image data and the RAW data set as a single file (step S111). The output destination of the data is, for example, a recording medium 206 or a server device which is not shown. In addition, the RAW data set which has been lossless-compressed by the compression/decompression unit 212 may be output.

<Zoom magnification ratio changing process>

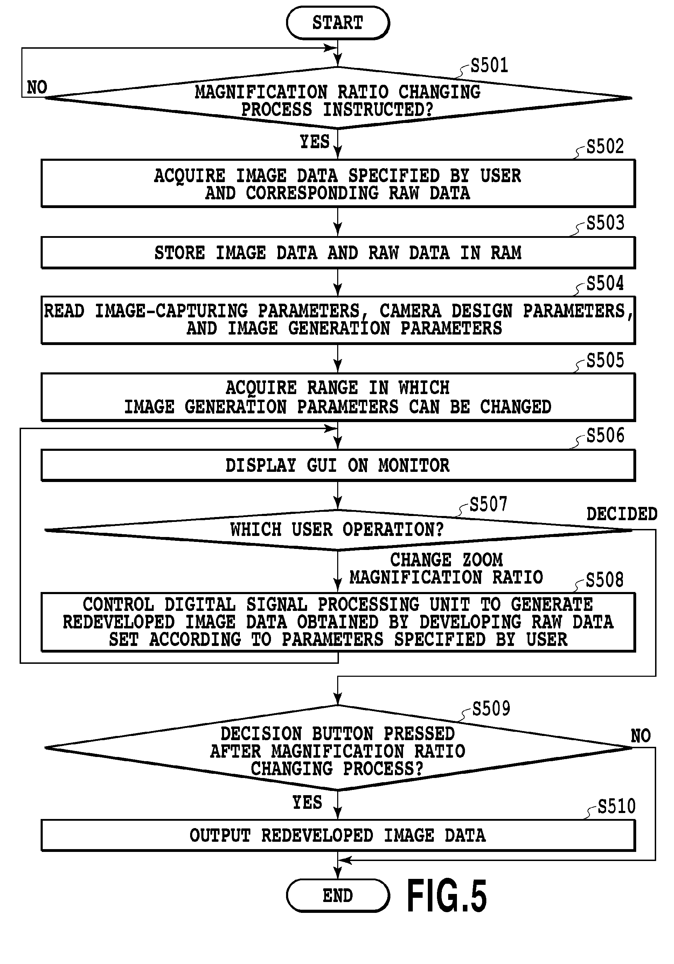

Next, a process of changing the zoom magnification ratio of the image after shooting (referred to as magnification ratio changing process in the following) will be described. Fig. 5 is a flow chart showing an exemplary magnification ratio changing process. The process shown in Fig. 5 is realized by the CPU 201 reading and executing a program stored in ROM 203, for example. In addition, although the magnification ratio changing process is usually started by a user instruction via the operation unit 164, it may be automatically started after shooting.

When instructed to perform the magnification ratio changing process (step S501), the CPU 201 acquires image data specified by the user and a RAW data set corresponding thereto from the recording medium 206, for example (step S502). The CPU 201 then controls the compression / decompression unit 212 to perform a decoding process on the image data (also on the RAW data set, if necessary), and stores the decoded image data and the RAW data set in a predetermined region of the RAM 202 (step S503).

The data acquired at step S502 need not be captured data which has been shot by the image-capturing device 100 or image data which has been generated by the image-capturing device 100, and may be data which has been stored on the recording medium 206, for example, by another image-capturing device or image processing apparatus. In such a case, however, it is necessary to separately acquire image-capturing parameters and camera design parameters relating to the RAW data to be acquired.

Next, the CPU 201 reads image-capturing parameters and camera design parameters from the RAW data set, and image generation parameters from the image data (step S504). The CPU 201 then acquires, from the image generation parameter generating unit 211, a range in which the image generation parameters can be changed (S505). The image generation parameters include the zoom magnification ratio of the image after shooting.

Next, the CPU 201 controls the CG generating unit 207 and the display control unit 204 to display an image represented by the image data and display, on the monitor 213, a graphical user interface (GUI) for changing the image generation parameters within a changeable range (step S506). Referring to images displayed on the monitor 213, the user presses a decision button on the GUI, for example, when a desired image is provided, or operates the GUI and presses a change button on the GUI, for example, when changing the image generation parameters.

The CPU 201 determines whether user operation is a press of the decision button or a press of the zoom magnification ratio change button (step S507). If the decision button is pressed, the CPU 201 determines that image data desired by the user has been captured and terminates the magnification ratio changing process.

If the zoom magnification ratio change button is pressed, the CPU 201 controls the digital signal processing unit 208 to generate image data (referred to as redeveloped image data in the following) which has been obtained by performing development process on the RAW data set according to the image generation parameters specified by the user via the GUI (step S508). The CPU 201 then returns the process to step S506 to display the image represented by the redeveloped image data on the GUI.

The CPU 201 determines, according to the determination at step S507, whether or not the decision button has been pressed after the magnification ratio changing process (step S509). The CPU 201, when determining at step S509 that the decision button has been pressed after the magnification ratio changing process, outputs the redeveloped image data by a process similar to that when outputting the initial image data (step S510). The magnification ratio changing process is then completed.

<Image processing>

Among the development processes by the digital signal processing unit 208, a process of synthesizing a plurality of RAW data (referred to as image synthesis process in the following) will be briefly described. The image synthesis process of the present embodiment changes the zoom magnification ratio by combining the synthetic aperture method which generates an image having a shallow depth of field from a multi-viewpoint image and electronic zooming, while controlling the depth of field by the image synthesis process.

As shown in Fig. 1, positions of the image-capturing units 101 to 161 are respectively different, and the RAW data set output from the image-capturing units 101 to 161 forms so-called multi-viewpoint images. The digital signal processing unit 208 acquires captured data of the RAW data set (captured data acquisition process). The digital signal processing unit 208 then performs a filtering process on individual image data as necessary and, after having adjusted the focus on a desired distance (referred to as focal distance in the following), sums up the image data to generate a synthetic image having a shallow depth of field. Adjustment of the depth of field can be generally performed by changing the filter used for the filtering process, or changing the number of images used for synthesis. In addition, the amount of displacement required for matching of an image can be calculated from camera design parameters such as the position and direction of each image-capturing unit and image generation parameters such as the focal distance.

To change the zoom magnification ratio, a combination of switching the image-capturing units to be used and a general technique of electronic zooming may be used. In other words, the zoom magnification ratio can be substantially continuously changed by selecting an image-capturing unit having an appropriate angle of view in accordance with the zoom magnification ratio and further performing the process of electronic zooming. In a general electronic zooming process, an image with a desired zoom magnification ratio is acquired by resampling pixels in a desired region while performing a filtering process on the image. As images to be used in synthesis, a plurality of images having the smallest angle of view may be used, among the images having a wider angle of view than the angle of view corresponding to the zoom magnification ratio to be output.

With regard to the aperture synthesis process and the electronic zooming process, performing the aperture synthesis process first is effective because the electronic zooming process is completed in a single iteration. However, a large zoom magnification ratio is inefficient in that the aperture synthesis process will be performed also on images in a region unnecessary for output. In such a case, it is preferred to conversely perform the electronic zooming process first. When performing the electronic zooming process, the image resampling process may be performed while considering matching of the image. Accordingly, matching is accomplished and a group of images having a desired number of pixels with a desired angle of view is generated. In the aperture synthesis process, it suffices to sum up the images after having performed the filtering process thereon.

< Synthesis process>

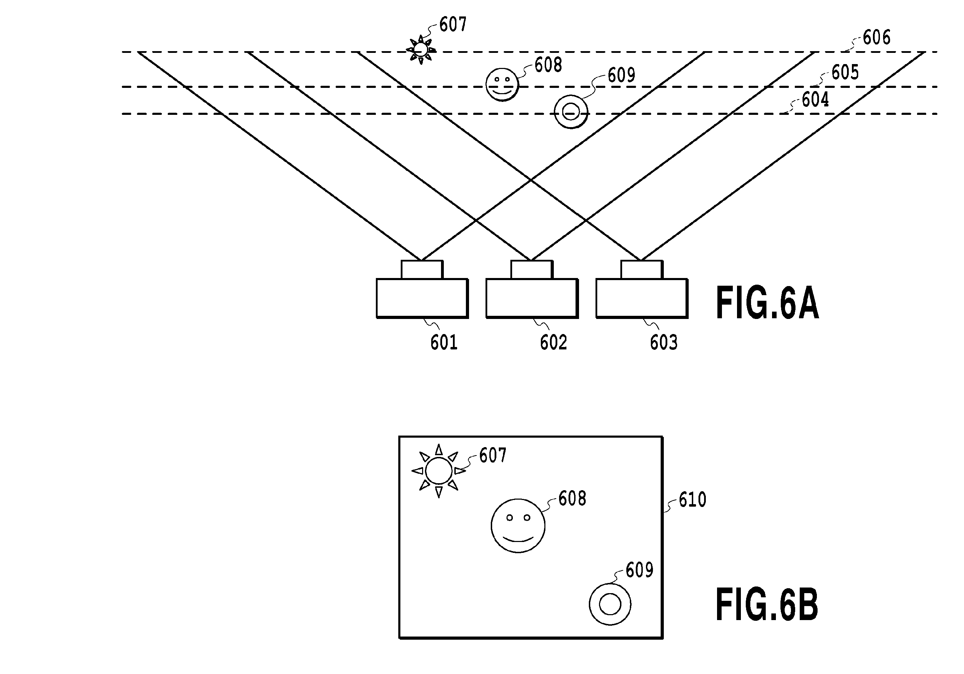

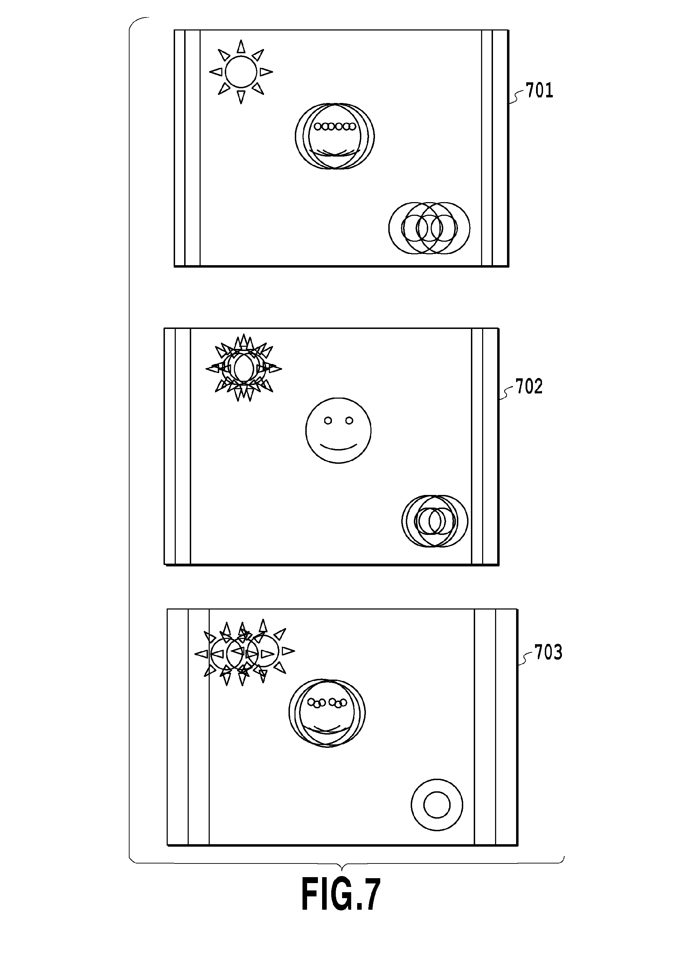

Referring to Figs. 6A, 6B, and 7, the concept of synthesizing an image by the digital signal processing unit 208 will be described. Fig. 6A shows subjects at different distances being captured by image-capturing units 601 to 603.

In Fig. 6A, the image-capturing units 601 to 603 are three representative image-capturing units, among the image-capturing units 101 to 161. Dashed lines 604 to 606 illustrate three representative virtual points of focus among virtual points of focus (position to which the focus is supposed to be adjusted). As shown in Fig. 6A, the subjects 607 to 609 are respectively placed at positions with different distances.

Fig. 6B shows an image 610 acquired by the image-capturing unit 601. The images acquired by the image-capturing units 602 and 603 turn out to be images with respective subjects 604 to 606 in the image 610 being displaced by a parallax corresponding to distances of subjects.

Fig. 7 is a conceptual diagram of an image rearranged (synthesized) by the digital signal processing unit 208. The image 701 is an image after rearrangement when the virtual point of focus is set on the dashed line 606. In the image 701, the focus is adjusted on the subject 607 whereas the subjects 608 and 609 are blurred.

The image 702 and the image 703 are images after rearrangement, when the virtual point of focus is adjusted at the dashed line 605 and when the virtual point of focus is adjusted at the dashed line 604, respectively. The images 702 and 703 are respectively subjects 608 and 609 having the focus adjusted thereon. By moving the virtual focus in this manner, an image can be acquired with the focus adjusted on a desired subject.

In the synthesis process, it becomes possible to adjust the focus on a predetermined subject and simultaneously blur other subjects by controlling the virtual point of focus. Examples of the synthesis process, without being limited thereto, may include, for example, an HDR process which broadens the dynamic range, or a resolution enhancing process which increases the resolution.

According to the configuration of the Embodiment 1 described above, the amounts of light received at respective angles of view can be made approximately the same. Accordingly, brightness, noise, and exposure time can be simultaneously adjusted among the images having different angles of view. Accordingly, the user can change zooming of image data after shooting without significant change of brightness, noise, and exposure time.

[Embodiment 2]

In the case of the Embodiment 1, a configuration has been described in which all the sizes of entrance pupils of respective image-capturing units approximately coincide with each other. For the present embodiment, a configuration will be described in which sizes of entrance pupils of respective image-capturing units are different from each other. Description of parts that are common with the Embodiment 1 will be omitted.

<Configuration of image-capturing device>

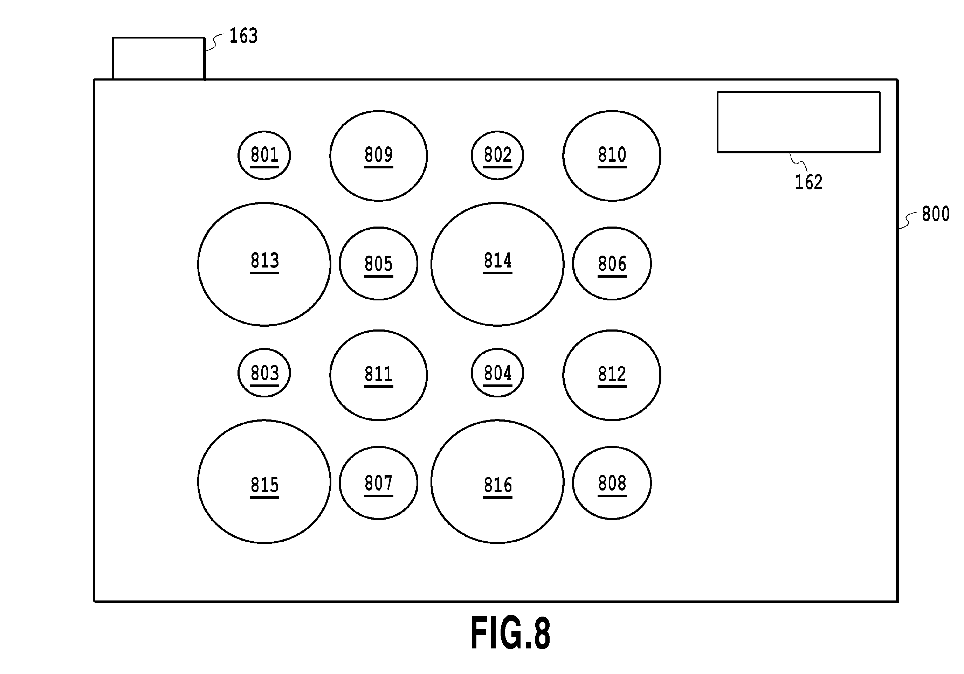

Fig. 8 shows an appearance of an image-capturing device 800 of the Embodiment 2. The image-capturing device 800 is a so-called camera array having 16 image-capturing units 801 to 816 on the front side (subject side). The image-capturing device 800 has a flash 162 and the shoot button 163. In addition, although not shown in Fig. 8, the image-capturing device 800 has an operation unit, a display unit, or the like on the back side. Although a case will be described below for the embodiment having 16 image-capturing units, two or more image-capturing units will do, without the number of image-capturing units being limited to 16. Since an example of adjusting the sizes of entrance pupils of the image-capturing units is shown in the Embodiment 2, the image-capturing device can be implemented using at least two types of image-capturing units having different angles of view. The rest of the configuration is similar to that of the Embodiment 1.

<Configurations of image-capturing units and combination thereof>

As with the configuration of the Embodiment 1, the angles of view of the image-capturing units in the present embodiment are also not all the same. For example, in the 16-lens camera array shown in Fig. 8, there are four types of angles of view of the image-capturing units 801 to 816, of which the image-capturing units 801 to 804, the image-capturing units 805 to 808, the image-capturing units 809 to 812, and the image-capturing units 813 to 816 have same angles of view, respectively. Although an example has been described in the Embodiment 1 in which the sizes of entrance pupils of the optical systems associated with the image-capturing units 101 to 161 are designed to be approximately the same, an example will be described in the present embodiment in which the sizes of entrance pupils of the optical systems associated with the image-capturing units 801 to 816 are different.

Also in the Embodiment 2, the image-capturing units 801 to 816 are configured to have approximately the same total light gathering abilities for respective angles of view in order to simultaneously adjust brightness, noise, and exposure time among images having different angles of view. Specifically, the image-capturing units 801 to 816 are configured to have approximately the same total light gathering abilities in terms of the evaluation values $E_j$ calculated by the following equation for respective angles of view, with j being an index of an angle of view.

$$E_j = \Sigma (S_i \times \tau_i \times \Omega_j) \qquad \text{Equation (4)}$$

Here, $\Sigma$ means that a sum is taken for image-capturing units having angles of view j. In addition, $S_i$ is the area

of an entrance pupil of the optical system associated with the i-th image-capturing unit. The area of an entrance pupil can be calculated from design data (design parameters) of the optical system. In addition, $\tau_i$ is the receiving efficiency of light energy of the i-th image-capturing unit. Although it is preferred that $\tau_i$ is directly measured, it can also be calculated from the transmittances of the lens group and color filters associated with the image-capturing unit, and the light receiving efficiency of the imaging sensor. $\Omega_j$, being the solid angle of the region in which the image-capturing unit having an angle of view j performs image-capturing, is similar to the Embodiment 1.

Since there are four types of angles of view in the example shown in Fig. 8, four types of evaluation values $E_j$ are calculated too. The evaluation value $E_j$ of the Embodiment 2 is also an amount proportional to the total light energy being received per unit time by a plurality of image-capturing units having an angle of view j. Accordingly, if $E_j$ are equal regardless of the angle of view j, the power of shot noise, which is the main cause of noise, becomes approximately the same, as with the Embodiment 1.

As with the Embodiment 1, although it is desirable that respective image-capturing units are configured so that their evaluation values $E_j$ are as equal as possible, it is difficult to match the evaluation values $E_j$ completely the same. It is also possible to define a tolerance of ratio of $E_j$ in the present embodiment, as with the Embodiment 1.

The entrance pupil area Si of the image-capturing unit i varies in accordance with the diaphragm value of the image-capturing unit. Accordingly, the evaluation value $E_j$ also varies when the diaphragm value of the image-capturing unit varies by user instruction or autoexposure function. When performing shooting in a very bright scene such as during sunny daytime, there may be a case such that saturation of the sensor cannot be prevented only by adjusting gain but can only be prevented by narrowing the diaphragm. If setting of a certain image-capturing unit has been changed in order to solve the problem in such scene, it is preferred to also change the setting of other image-capturing units so that evaluation values $E_j$ become approximately the same. If an diaphragm setting value of a certain image-capturing unit has been changed in the present embodiment, diaphragm setting values of other image-capturing units are calculated in the optical system control method generating unit 209 so that evaluation values $E_j$ become approximately the same, details of which will be described below.

<Operation when changing setting of image-capturing unit>

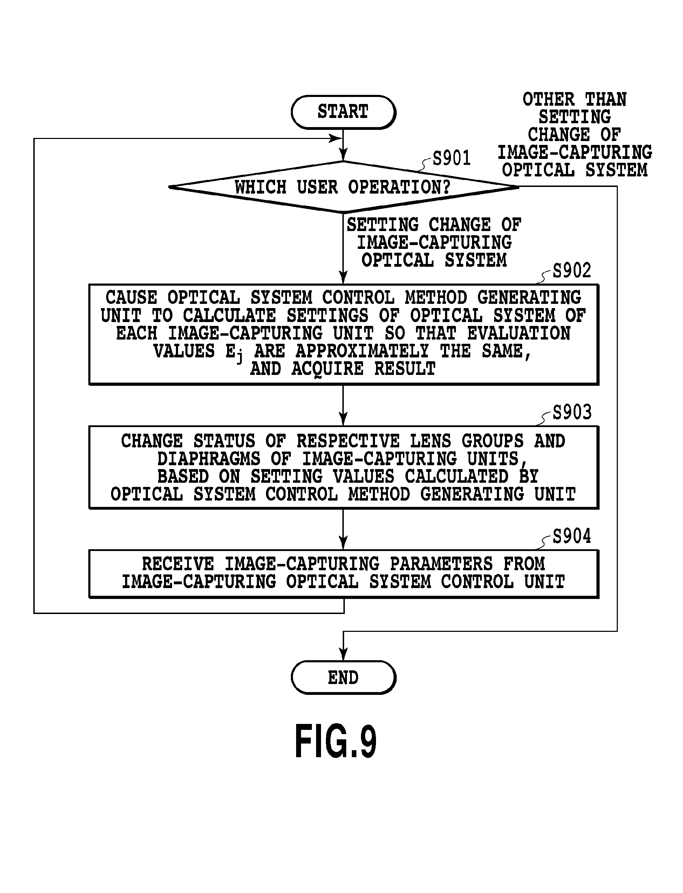

An image-capturing operation is explained referring to the flow chart of Fig. 9. The process shown in Fig. 9 is realized by the CPU 201 reading and executing a program stored in ROM 203, for example. When the user operates the operation unit 164 and the shoot button 163, the image-capturing operation is started. The CPU 201 receives the user instruction via the operation unit 164 and the shoot button 163, and determines whether or not user operation is change of setting of the image-capturing optical system (step S901).

If the user has operated the operation unit 164 and changed the setting of the image-capturing optical system such as focus and diaphragm, the CPU 201 acquires the control method of the optical system associated with each image-capturing unit from the optical system control method generating unit 209 (step S902).

At step S902, in a mode where user operation causes all the image-capturing units to perform shooting with a uniformly adjusted focus, the focuses of all the image-capturing units take the value specified by the user. When respective image-capturing units perform shooting with different focuses, only the image-capturing unit specified by the user is set to have the specified focus value. The optical system control method generating unit 209 operates in a similar manner also with regard to the diaphragm. In this occasion, the optical system control method generating unit 209 calculates diaphragm values of other image-capturing units so that the evaluation value $E_k$ of the first angle of view k approximately agrees with the evaluation value $E_j$ of the second angle of view j. For example, when the user increases the diaphragm value by 20% in a mode where all the image-capturing units perform shooting with a uniform diaphragm, if the diaphragm values of all the other image-capturing units are also increased by 20%, evaluation values $E_j$ approximately agree with each other. When performing shooting with a different diaphragm value for each image-capturing unit, on the other hand, only the image-capturing unit specified by the user is set to have the specified diaphragm value. For other image-capturing units, diaphragm values of other image-capturing units are calculated so that the evaluation values $E_k$ of other angles of view k approximately agree with the evaluation values $E_j$ of the angle of view of the image-capturing unit specified by the user.

In addition, the diaphragm value and the focus are calculated so that the evaluation values $E_k$ of other angles of view k agree with the evaluation value $E_j$ also for an optical system in which the entrance pupil area Si is changed by changing the focus instead of the diaphragm.

The CPU 201 controls the optical system control unit 210 based on the calculated diaphragm value and focus to change the status of respective lens groups and diaphragms of the image-capturing units 101 to 161 (step S903). The optical system control unit 210 transmits, to the CPU 201, image-capturing parameters indicating the status of respective lens groups and diaphragms of the image-capturing units 101 to 161, and the CPU 201 stores the received image-capturing parameters in a predetermined region of the RAM 202 (step S904).

When the user pressed the shoot button 163 about halfway down, autofocus for automatically setting the focus and autoexposure for automatically setting the diaphragm to adjust the amount of exposure are performed, based on the setting by the user. This is also a change operation of the image-capturing optical system since the focus and diaphragm of the image-capturing unit are automatically changed by the operation, and the operation of steps S902 to S904 is performed.

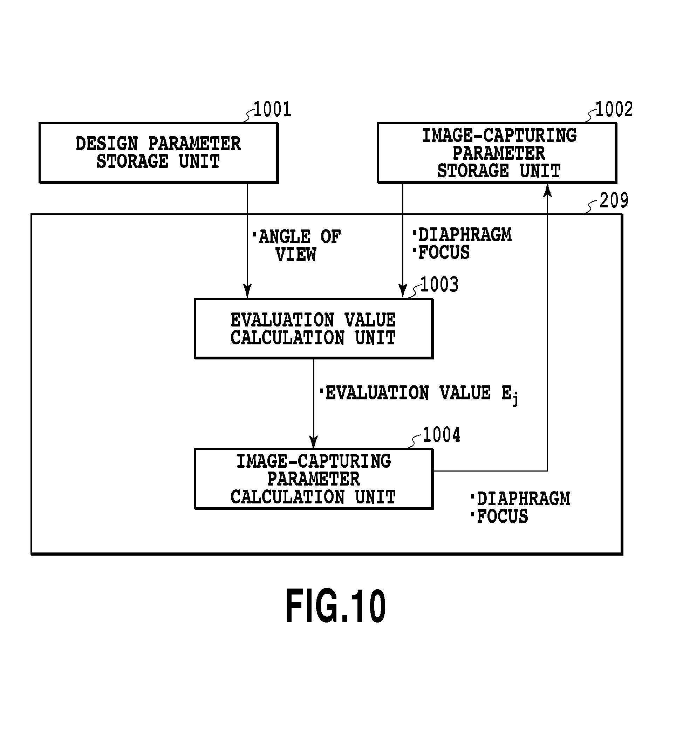

Fig. 10 shows a data flow of calculating image-capturing parameters described at steps S902 to S904 of the flow chart of Fig. 9. The optical system control method generating unit 209 has an evaluation value calculation unit 1003 and an image-capturing parameter calculation unit 1004. A design parameter storage unit 1001 and an image-capturing parameter storage unit 1002 are formed by the RAM 202, for example. The evaluation value calculation unit 1003 acquires design parameters of respective image-capturing units including values of angles of view from the design parameter storage unit 1001 (design parameter acquisition process). In addition, the evaluation value calculation unit 1003 acquires image-capturing parameters of respective image-capturing units including diaphragm or focus values from the image-capturing parameter storage unit 1002 (image-capturing parameter acquisition process). The image-capturing parameters acquired from the image-capturing parameter storage unit 1002 include image-capturing parameters which have been changed by user operation. The evaluation value calculation unit 1003 calculates the evaluation values $E_j$ for respective angles of view using the acquired design parameters and image-capturing parameters. The image-capturing parameter calculation unit 1004 acquires the calculated evaluation values $E_j$ and calculates image-capturing parameters including diaphragm or focus values. In other words, the image-capturing parameter calculation unit 1004 calculates diaphragm or focus values of image-capturing units having a predetermined angle of view so that evaluation values $E_j$ for respective angles of view become the same, as described above. The image-capturing parameter calculation unit 1004 then stores the calculated image-capturing parameters in the image-capturing parameter storage unit 1002. Subsequently, image-capturing will be performed by image-capturing units having user-specified diaphragm or focus values set therefor, and image-capturing units having diaphragm or focus values calculated by the image-capturing parameter calculation unit set therefor.

<Image-capturing operation, zoom magnification ratio changing process, and image processing>

Since the image-capturing operation, zoom magnification ratio changing process, and image processing of the present embodiment are equivalent to those of the Embodiment 1, description thereof will be omitted.

According to the configuration of the Embodiment 2 described above, the amounts of light received at respective angles of view can be made approximately the same. In the Embodiment 2, the amounts of light received at respective angles of view can be made approximately the same even if the image-capturing units have different sizes of entrance pupils. In addition, even if an diaphragm value has been adjusted by user operation, the amounts of light received at respective angles of view can be made approximately the same by adjusting the diaphragm values of other image-capturing units.

[Embodiment 3]

In the Embodiments 1 and 2, an example has been described for a case in which there are two or more types of angles of view for each image-capturing unit and one or more image-capturing units for each angle of view, and a plurality of captured data having a same angle of view are used at the time of image synthesis. In the Embodiment 3, a configuration will be described for a case where a plurality of captured data having different angles of view is used at the time of image synthesis.

<Configuration of image-capturing device>

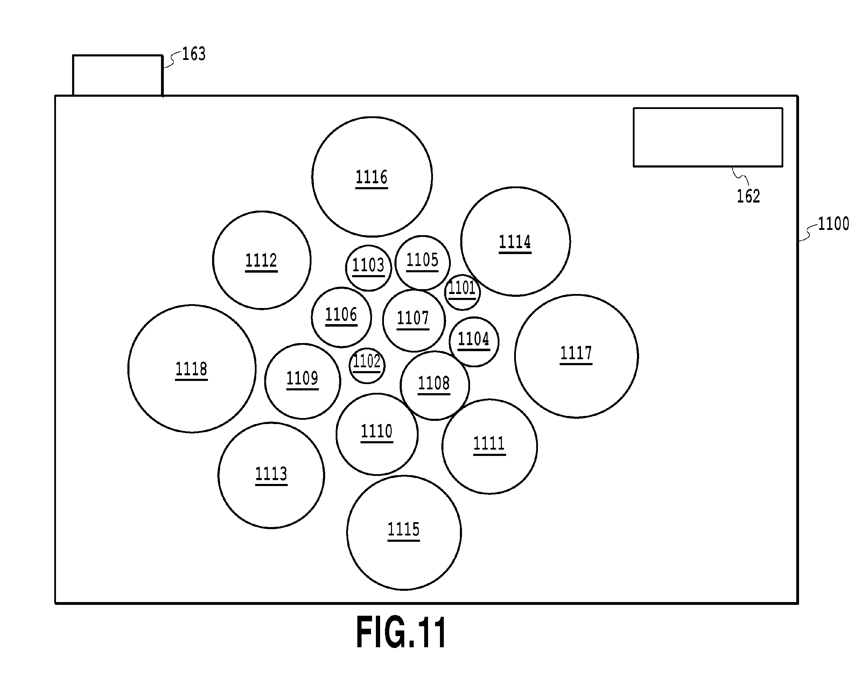

Fig. 11 shows an appearance of an image-capturing device 1100 in the Embodiment 3. The image-capturing device 1100 is a so-called camera array having 18 image-capturing units 1101 to 1118 on the front (subject side). The image-capturing device 1100 has the flash 162 and the shoot button 163. As with the Embodiments 1 and 2, the image-capturing device 1100 has an operation unit or display unit on the back side. Although a case will be described below for the present embodiment having 18 image-capturing units, two or more image-capturing units will do, without the number of image-capturing units being limited to 18. The rest of the configuration is similar to that of the Embodiment 1.

<Configurations of image-capturing units and combination thereof>

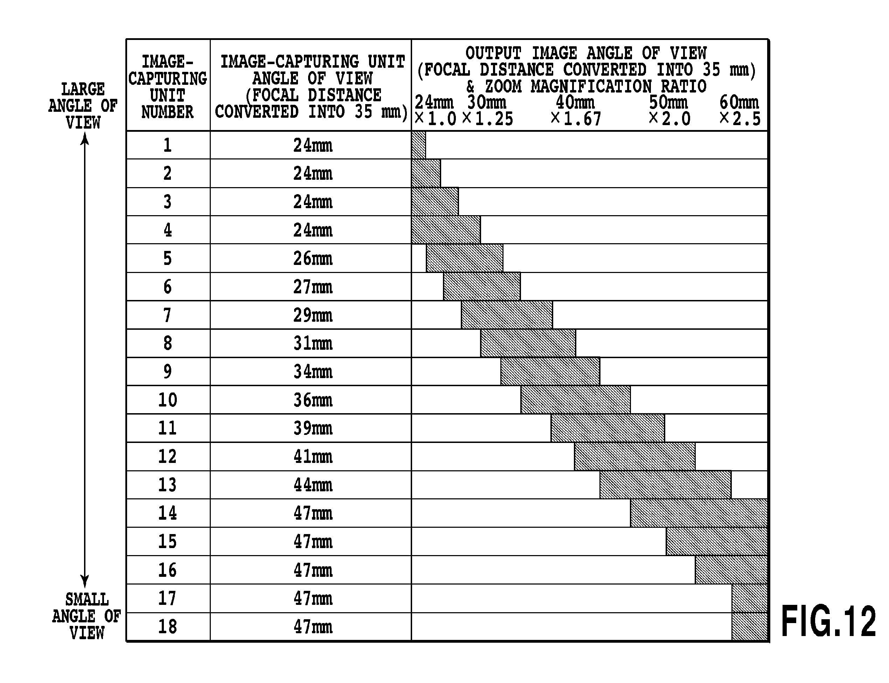

As with the configuration of the Embodiment 1, the angles of view of the image-capturing units in the present embodiment are also not all the same. For example, angles of view of the 18-lens camera array shown in Fig. 11 are different as shown in the image-capturing unit angle of view field of Fig. 12. In addition, as with the Embodiment 2, it is assumed in the present embodiment that the sizes of entrance pupils of the optical systems associated with the image-capturing units 1101 to 1118 are different.

In the present embodiment, the configuration of image-capturing units 1101 to 1118 is designed so that they are approximately the same in terms of the evaluation value G(f) calculated by the following equation.

$$G(f) = \Sigma(S_i \times \tau_i \times \Omega_i) \qquad \text{Equation (5)}$$

Here, $S_i$, $\tau_i$, and $\Omega_i$ are respectively the entrance pupil area, light energy receiving efficiency, and solid angle of the i-th image-capturing unit, as with the Embodiment 2. In addition, f is the focal distance converted into the 35mm version corresponding to the angle of view (referred to as output image angle of view in the following) of the image data after synthesis. In addition, although $\Sigma$ expresses the sum over image-capturing units having an angle of view j in the Embodiment 2, it takes the sum over the image-capturing units used when synthesizing an image of an output image angle of view in the present embodiment. In other words, an evaluation value is calculated to make the brightness of the output image angles of view approximately the same, rather than the angles of view of the image-capturing units, for each output image angle of view in the present embodiment. Fig. 12 shows a relation between the output image angle of view and the image-capturing unit to be used. In the present embodiment, image-capturing units with shading on the output image angle of view fields of Fig. 12 are selected and used when synthesizing an image having a certain output image angle of view. For example, in the case of a 30 mm output image angle of view, a captured data set captured by the image-capturing units 1104 to 1107 identified by image-capturing unit numbers 4 to 7 will be used. As shown in Fig. 12, switching to an image-capturing unit having a narrower angle of view is gradually performed as the output image angle of view becomes narrower (i.e., the focal distance becomes longer). In the present embodiment, light gathering abilities of a first captured data set identified by image-capturing unit numbers 1 to 4, for example, and a second captured data set identified by image-capturing unit numbers 4 to 7 are made to be approximately the same.

As many evaluation values G (f) as at least the number of types of combinations of image-capturing units to be used are calculated. The evaluation value G(f) is also an amount proportional to the total light energy being received by a plurality of image-capturing units per unit time. Accordingly, if G(f) is the same regardless of the output image angles of view, the power of shot noise, which is the main cause of noise, becomes approximately the same as with the Embodiment 1.

A method for designing an image-capturing unit to make the evaluation values G (f) approximately the same. First, it is assumed that the angle of view, i.e., the solid angle $\Omega_i$ of each image-capturing unit is given by other requirements such as output image angle of view. In addition, the solid angle $\Omega_i$ may be calculated as described in the Embodiment 1. In addition, it is assumed that $\tau_i$ has also been determined by characteristics of the optical glass and color filter, or characteristics of the imaging sensor used in each image-capturing unit as described in the Embodiment 2. Here, the entrance pupil area Si is an item which is adjustable to make the evaluation values G(f) approximately the same. The entrance pupil area Si can be determined in descending order of angles of view. In Fig. 11, there are 14 combinations of image-capturing units to be used, in accordance with the output image angles of view. They are numbered in descending order of output image angles of view such as 1, 2,.., 14, with evaluation values corresponding thereto denoted as G(1), G(2),.., G(14). Since the first to the fourth image-capturing units are used to synthesize an image having the widest output image angle of view, the evaluation value G(1) is expressed as the following equation.

$$G(1) = S1\tau1\Omega1 + S2\tau2\Omega2 + S3\tau3\Omega3 + S4\tau4\Omega4 \qquad \text{Equation (6)}$$

Similarly, the evaluation value G (2), for which the second to the fifth image-capturing units are used, is expressed as follows.

$$G(2) = S2\tau2\Omega2 + S3\tau3\Omega3 + S4\tau4\Omega4 + S5\tau5\Omega5 \qquad \text{Equation (7)}$$

In order to make G(1) and G (2) approximately the same, the following equation must hold.

$$S1\tau1\Omega1 = S5\tau5\Omega5 \qquad \text{Equation (8)}$$

Here, τ1, τ5, Ω1, and Ω5 are already given and thus the entrance pupil area S5 of the fifth image-capturing unit is determined by the entrance pupil area S1 of the first image-capturing unit. Similarly, the sixth entrance pupil area S6 is determined by the entrance pupil area S2 of the second image-capturing unit. Furthermore, the entrance pupil area S7 is determined by the entrance pupil area S3, and the entrance pupil area S8 is determined by the entrance pupil area S4. The entrance pupil area S9 is determined by the entrance pupil area S4, that is, it is determined by S1. In a similar manner, the entrance pupil areas up to S16 are determined in the example shown in Fig. 9. The 13th evaluation value G(13) and the 14th evaluation value G(14) are then given as follows.

$$G(13) = S13\tau13\Omega13 + S14\tau14\Omega14 + S15\tau15\Omega15 + S16\tau16\Omega16$$

$$\text{Equation (9)}$$

$$G(14) = S14\tau14\Omega14 + S15\tau15\Omega15 + S16\tau16\Omega16 + S17\tau17\Omega17 +$$

$$S18\tau18\Omega18 \qquad \text{Equation (10)}$$

Here, G(13) and G(14) are approximately the same, the following equation is acquired.

$$S13\tau13\Omega13 = S17\tau17\Omega17 + S18\tau18\Omega18 \qquad \text{Equation (11)}$$

In this case, there is only one degree of freedom for the entrance pupil area S17 and the entrance pupil area S18, either of which can be freely determined. Usually, it suffices to make the entrance pupil area S17 and entrance pupil area S18 approximately the same. It should be noted that such a degree of freedom appears in the 14th output image angle of view because there are two image-capturing units, namely, the 17th image-capturing unit and the 18th image-capturing unit, to be newly used therefor. If, on the contrary, the number of image-capturing units to be newly used does not increase, such a degree of freedom does not appear.

It turns out that, as long as image-capturing units used for image synthesis are changed one by one, specifying the entrance pupil area Si for only a few image-capturing units having a wide angle of view allows the rest to be automatically determined. When increasing the number of image-capturing units by two or more at a time, the number of entrance pupils that can be specified in accordance with the increased number of image-capturing units increases. In the example shown in Fig. 11, only the four values of S1, S2, S3, and S4, and one of S17 and S18 are the values which can be freely set. In spite of such a constraint, it is possible to design respective image-capturing units according to the procedure described above to make the evaluation value G (f) approximately the same.

In the example of Fig. 12, an example of employing image-capturing units corresponding to output image angles of view in sequence according to sizes of angles of view. However, image-capturing units to be used need not be selected in the order of sizes of angles of view, as long as a synthesized image corresponding to the output image angle of view can be output. In addition, although an example of calculating evaluation values in descending order of output image angles of view associated with the image-capturing units has been described in the present embodiment, evaluation values may be calculated in ascending order of output image angles of view associated with the image-capturing units.

<Image-capturing operation, zoom magnification ratio changing process, and image processing>

Since the image-capturing operation, zoom magnification ratio changing process, and image processing of the Embodiment 3 are equivalent to those of the Embodiments 1 and 2, description thereof will be omitted.

According to the configuration of the Embodiment 3 described above, the amounts of light received at respective angles of view can be made approximately the same, and it becomes possible to simultaneously adjust brightness, noise, and exposure time, also when synthesizing image data having different angles of view.

[Embodiment 4]

Considering a camera array in which both wide-angle cameras and telescopic cameras are uniformly aligned, images having a shallower depth of field than the depth of field of images acquired by individual cameras can be generated at various angles of view. However, there is a problem that, in comparison with a commonly-used camera having a large diameter zoom lens in which the F number does not change very much, the camera array with the camera arrangement described above has a poor balance of the depth of field acquired by the telescopic cameras against the depth of field acquired by the wide-angle cameras.

The present embodiment provides a method for adjusting the balance of the depth of field acquired by the wide-angle cameras and the depth of field acquired by the telescopic cameras to the balance of the depth of field acquired by a commonly-used camera having a large diameter zoom lens.

<Configuration of image-capturing device>

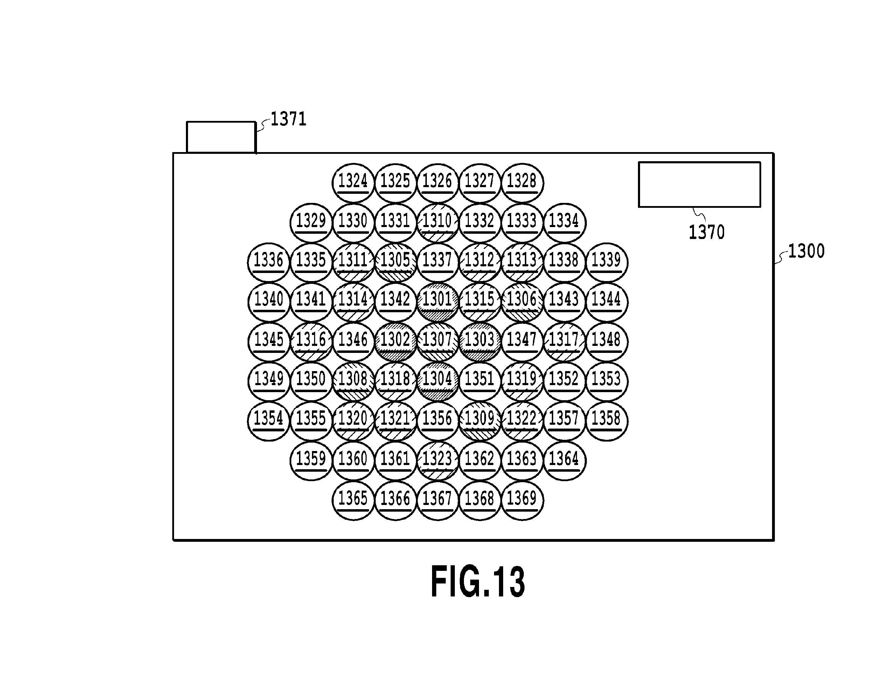

Fig. 13 shows an appearance of an image-capturing device 1300 in the Embodiment 4. The image-capturing device 1300 shown in Fig. 13 is a so-called camera array having 69 image-capturing units 1301 to 1369 on the front (subject side). Different hatchings of the image-capturing units 1301 to 1369 shown in Fig. 13 indicate difference of angles of view. For example, the image-capturing units 1301 to 1304, the image-capturing units 1305 to 1309, the image-capturing units 1310 to 1323, and the image-capturing units 1324 to 1369 have same angles of view, respectively. Details of the arrangement of the image-capturing units will be described below. The image-capturing device 1300 further has a flash 1370 and a shoot button 1371. Although not shown in Fig. 13, the image-capturing device 1300 has an operation unit and a display unit on the back side. Although a case will be described below for the Embodiment 4 having 69 image-capturing units, the number of image-capturing units is not limited to 69. The plurality of image-capturing units is arranged so that they can shoot a same subject or an approximately the same region. The phrases "approximately the same region" and "approximately the same time" indicate a range in which an image similar to the image data captured by other image-capturing units is acquired, when image data captured by a plurality of image-capturing units is synthesized, for example.

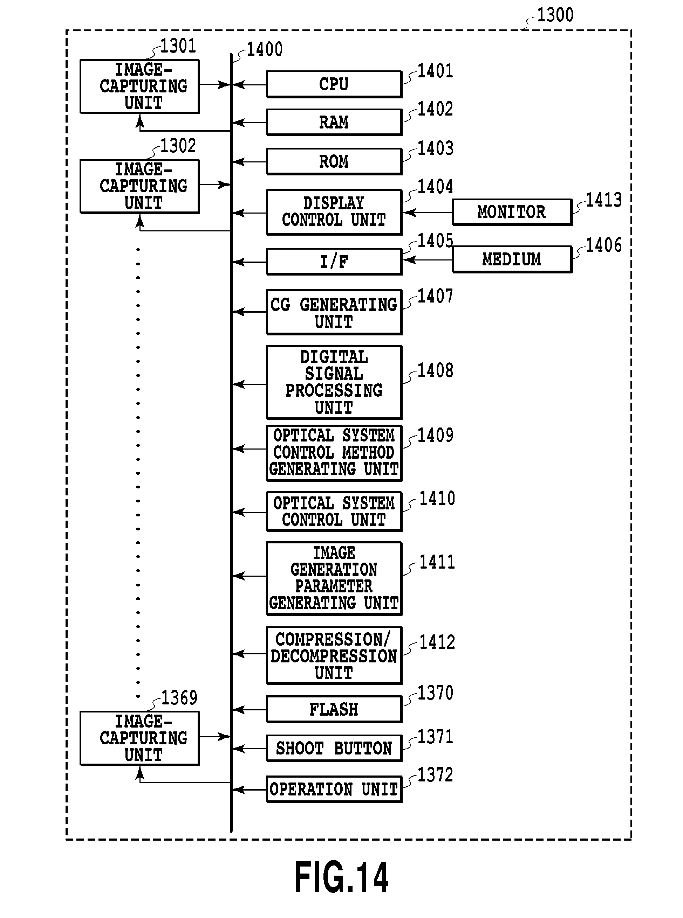

Fig. 14 is a block diagram showing a configuration of the image-capturing device 1300. A CPU 1401 uses a RAM 1402 as a work memory to execute the OS and various programs stored in a ROM 1403. In addition, the CPU 1401 controls each component of the image-capturing device 1300 via a system bus 1400. The RAM 1402 stores image-capturing parameters or the like, which are information indicating the status of the image-capturing units 1301 to 1369 such as settings of focus, diaphragm, or the like. The ROM 1403 stores camera design parameters or the like indicating relative positional relation of the image-capturing units 1301 to 1369 and pixel pitches of image-capturing elements of respective image-capturing units, receiving efficiency of light energy, and angles of view (solid angles) at which the image-capturing units can capture images. Although not shown, camera design parameters of the image-capturing unit may be stored in the ROMs of the image-capturing units 1301 to 1369.

The CPU 1401 controls a computer graphics (CG) generating unit 1407 and a display control unit 1404 to display a user interface (UI) on a monitor 1413. In addition, the CPU 1401 receives a user instruction via the shoot button 1371 and the operation unit 1372. The CPU 1401 then can set shooting conditions such as subject distance, focal distance, diaphragm, exposure time, and light emission of flash at the time of image-capturing, according to the user instruction. In addition, the CPU 1401 can instruct image-capturing and perform display setting of captured images according to the user instruction. The CG generating unit 1407 generates data such as characters and graphics for realizing the UI.

When instructed to perform shooting by the user, the CPU 1401 acquires a control method of the optical system corresponding to the user instruction from an optical system control method generating unit 1409. Next, the CPU 1401 instructs an optical system control unit 1410 to perform image-capturing, based on the acquired control method of the optical system. Upon receiving the image-capturing instruction, the optical system control unit 1410 performs control of the image-capturing optical system such as focusing, adjusting the diaphragm, opening or closing the shutter, or the like. In addition, the optical system control unit 1410 stores, in the RAM 1402, image-capturing parameters which are information indicating the status of the image-capturing units 1301 to 1369 such as focus setting, diaphragm setting, or the like indicating the control result of the image-capturing optical system. Instead of controlling the image-capturing optical system of respective image-capturing units 1301 to 1369 by a single optical system control unit 1410, each of the image-capturing units 1301 to 1369 may be provided with an optical system control unit which can communicate with the CPU 1401.

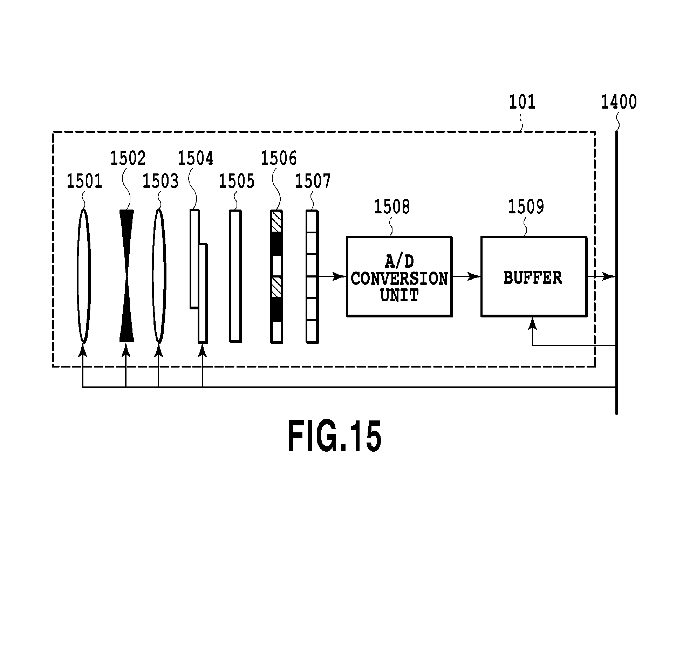

Each of the image-capturing units 1301 to 1369 receives light from a subject in an imaging sensor 1507 such as a CCD or a CMOS. Details will be described below in relation with Fig. 15. Each of the image-capturing units 1301 to 1369 temporarily retains, in a buffer memory within each of the image-capturing units 1301 to 1369, the captured data (referred to as RAW data in the following) which are obtained by performing analog-to-digital (A/D) conversion on the analog signal output from the imaging sensor 1507. The RAW data retained in the buffer memory are stored in a predetermined region of the RAM 1402 in sequence by control of the CPU 1401.

A digital signal processing unit 1408 performs a development process to generate image data from a plurality of RAW data (referred to as RAW data set in the following) stored in a predetermined region of the RAM 1402, and stores the RAW data set and generated image data in a predetermined region of the RAM 1402. In addition, the digital signal processing unit 1408 can perform a process of changing the zoom magnification ratio for image data after shooting, and generating image data after the change. The development process includes a synthesis process of synthesizing a plurality of RAW data, a demosaicing process, a white balance process, a gamma process, and a noise reduction process. To the generated image data, parameters at the time of the development process (referred to as image generation parameters in the following) indicating focal distance, zoom magnification ratio, depth of field, or the like are added. The image generation parameters are generated based on values specified by the user, for example. In addition, the initial setting value can be used as the image generation parameter at the time of the first developing, for example. In addition, whereas at least image-capturing parameters are added to the RAW data set, camera design parameters may be added thereto, considering a development process using an external image processing apparatus.

The CPU 1401 controls a display control unit 1404 to display the image data stored in a predetermined region of the RAM 1402 on the monitor 1413. A compression / decompression unit 1412 performs an encoding process of converting the image data stored in a predetermined region of the RAM 1402 into a format such as JPEG or MPEG. In addition, the compression / decompression unit 1412 performs a process of lossless-compressing the RAW data set, if necessary.

An interface (I/F) 1405 has a function of reading from and writing into a recording medium 1406 such as, for example, a memory card, a USB memory or the like, and a function of connecting to a wired or wireless network. The I/F 1405 outputs JPEG or MPEG format image data and the RAW data set stored in the RAM 1402, for example, to an external medium or a server device, or inputs various data from an external recording medium or a server device, according to instructions of the CPU 1401.

An image generation parameter generating unit 1411 generates image generation parameters required for the development process in the digital signal processing unit 1408.

Although the image-capturing device 1300 shown in Fig. 14 has the image-capturing units 1301 to 1369 and other components integrated therein as a single unit, the image-capturing units 1301 to 1369 and other components (image processing apparatus) may be separated. In such a case, the image-capturing units 1301 to 1369 and the image processing apparatus may be respectively provided with a serial bus I/F such as USB or IEEE 1394 or a communication unit such as a wireless network card, for example, to perform transmission and reception of control signals, or input and output of data via the communication unit.

< Configuration of each image-capturing unit>

The block diagram of Fig. 15 shows a configuration of the image-capturing units 1301 to 1369. Although Fig. 15 shows a configuration of the image-capturing unit 1301, other image-capturing units 1302 to 1369 have an approximately similar configuration. However, angles of view of the image-capturing units 1301 to 1369 are not configured to be totally identical. Details will be described below.

Light from a subject passes through a focus lens group 1501, an diaphragm 1502, a fixed lens group 1503, a shutter 1504, an infrared cut filter 1505, and a color filter 1506 to form an image on the imaging sensor 1507 such as a CMOS sensor or a CCD. An analog-to-digital conversion unit 1508 performs analog-to-digital conversion on analog signals output from the imaging sensor 1507. A buffer 1509 temporarily stores the RAW data output from the analog-to-digital conversion unit 1508, and transfers the RAW data to the RAM 1402 via the system bus 1400 according to a request of the CPU 1401.

The arrangement of the lens group and the diaphragm shown in Fig. 15 is an example and may be a different arrangement. For example, a part or all of the image-capturing units need not be provided with the fixed lens group 1503 for improving lens performance such as telecentricity.

<Image-capturing operation>

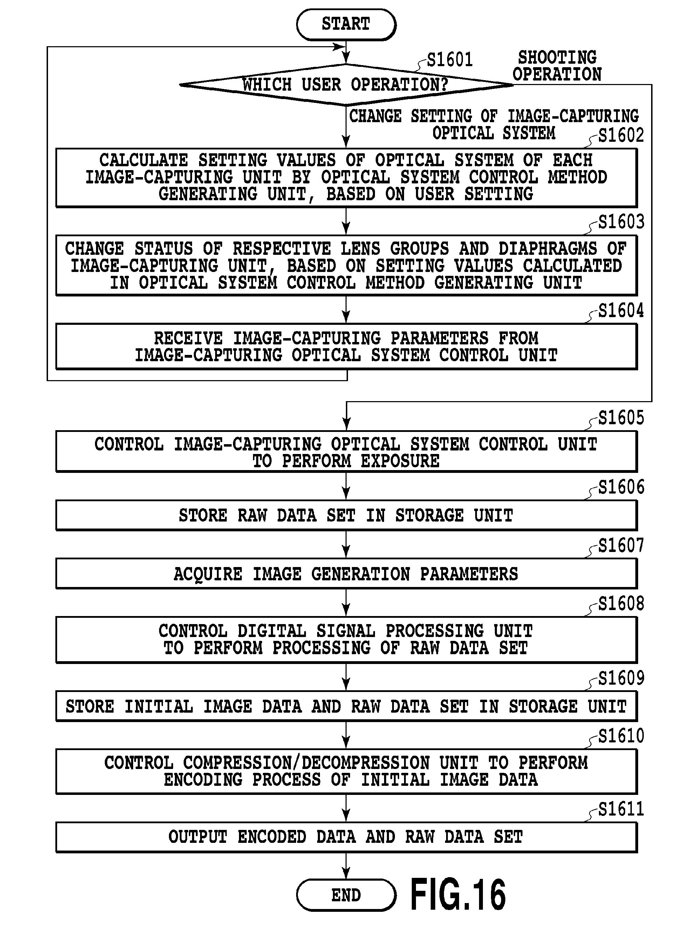

Fig. 16 is a flow chart showing an image-capturing operation of the Embodiment 4. The process shown in Fig. 16 is realized by the CPU 1401 reading and executing a program stored in the ROM 1403, for example. When the user operates the operation unit 1372 and the shoot button 1371, the image-capturing operation shown in Fig. 16 is started. The CPU 1401 receives user instructions via the operation unit 1372 and the shoot button 1371 and determines the operation of the user (step S1601).

When the user operates the operation unit 1372 to change the setting of the image-capturing optical system such as focus and diaphragm, the CPU 1401 acquires, from the optical system control method generating unit 1409, a control method of the optical system associated with each image-capturing unit (step S1602). At step S1602, the optical system control method generating unit 1409 calculates, based on an operation mode preliminarily set by the user, the control method of the optical system of the image-capturing unit. For example, in an operation mode in which all the image-capturing units perform shooting in accordance with a same focus, the optical system control method generating unit 1409 sets the focus of all the image-capturing units to a value specified by the user. On the contrary, in an operation mode in which a plurality of image-capturing units respectively performs shooting in accordance with different focuses, the optical system control method generating unit 1409 calculates a setting value other than that specified by the user so as to maintain the focus of the image-capturing unit. The optical system control method generating unit 1409 performs a similar operation also on the diaphragm.

The CPU 1401 controls the optical system control unit 1410 based on the calculated diaphragm value and the value of focus to change the status of respective lens groups and diaphragms of the image-capturing units 1301 to 1369 (step S1603). The optical system control unit 1410 transmits, to the CPU 1401, an image-capturing parameter indicating the status of respective lens groups and diaphragms of the image-capturing units 1301 to 1369, and the CPU 1401 stores the received image-capturing parameter in a predetermined region of the RAM 1402 (step S1604).

When the user presses the shoot button 1371 about halfway down, autofocus for automatically setting the focus and autoexposure for automatically setting the diaphragm to adjust the amount of exposure are performed, based on the setting by the user. This is also a change operation of the image-capturing optical system since the focus and diaphragm of the image-capturing unit are automatically changed by the operation.

When the user presses the shoot button 1371 completely down, the CPU 1401 determines at step S1601 that the shooting operation has been performed. The CPU 1401 controls the optical system control unit 1410 to open the shutter 1504 of the image-capturing units 1301 to 1369 for a preliminarily set time and expose the imaging sensor 1507 (step S1605).

Subsequently, the CPU 1401 controls the buffer 1509 of the image-capturing units 1301 to 1369 to store the RAW data set in a predetermined region of the RAM 1402 (step S1606).

Next, the CPU 1401 controls the image generation parameter generating unit 1411 to acquire image generation parameters such as zoom magnification ratio, focal distance, depth of field or the like, and store them in a predetermined region of the RAM 1402 (step S1607). The CPU 1401 then controls the digital signal processing unit 1408 to perform the development process of the RAW data set (step S1608).

The digital signal processing unit 1408 receives RAW data set, image-capturing parameters, camera design parameters, and image generation parameters, and performs the development process based on these data and parameters to generate image data (referred to as initial image data in the following). Subsequently, the digital signal processing unit 1408 adds image-capturing parameters (camera design parameters, if necessary) to the RAW data set, and also adds the image generation parameters used for the development process to the initial image data. The CPU 1401 stores the initial image data and the RAW data set output by the digital signal processing unit 1408 in a predetermined region of the RAM 1402 (step S1609).

Next, the CPU 1401 controls the compression / decompression unit 1412 to perform an encoding process on the initial image data (step S1610). The CPU 1401 then controls the I/F 1405 to output the encoded initial image data and the RAW data set as a single file (step S1611). The output destination of the data is, for example, a recording medium 1406 or a server device not shown. In addition, the RAW data set which has been lossless-compressed by the compression / decompression unit 1412 may be output.

<Resynthesis process>

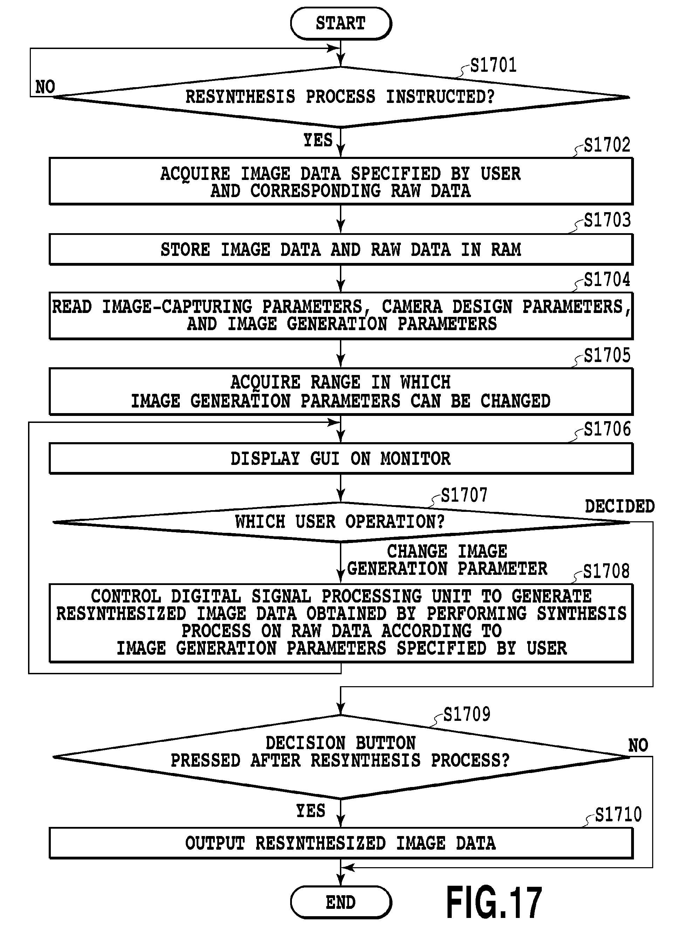

Next, a process of resynthesizing the image (referred to as resynthesis process in the following) by changing image generation parameters such as zoom magnification ratio or depth of field after shooting will be described. Fig. 17 is a flow chart showing a resynthesis process. The process shown in Fig. 17 is realized by the CPU 1401 reading and executing a program stored in the ROM 1403, for example. In addition, although the resynthesis process is usually started by a user instruction via the operation unit 1372, it may be automatically started after shooting.

When instructed to perform the resynthesis process (step S1701), the CPU 1401 acquires image data specified by the user and a RAW data set corresponding thereto from the recording medium 1406, for example (step S1702). The CPU 1401 then controls the compression / decompression unit 1412 to perform a decoding process on the image data (also on the RAW data set, if necessary), and stores the decoded image data and the RAW data set in a predetermined region of the RAM 1402 (step S1703).

The data acquired at step S1702 need not be captured data which has been captured by the image-capturing device 1300 or image data which has been generated, and may be data which has been stored on the recording medium 1406, for example, by another image-capturing device or image processing apparatus. In such a case, however, it is necessary to separately acquire image-capturing parameters and camera design parameters relating to the RAW data to be acquired.

Next, the CPU 1401 reads image-capturing parameters and camera design parameters from the RAW data set, and image generation parameters from the image data (step S1704). The CPU 1401 then acquires, from the image generation parameter generating unit 1411, a range in which the image generation parameters can be changed (S1705). The image generation parameters include the zoom magnification ratio or the depth of field (or the effective F number) of the image after shooting.

Next, the CPU 1401 controls the CG generating unit 1407 and the display control unit 1404 to display an image represented by the image data and display, on the monitor 1413, a graphical user interface (GUI) for changing the image generation parameters within a changeable range (step S1706). Referring to images displayed on the monitor 1413, the user presses a decision button on the GUI, for example, when a desired image is provided, or operates the GUI and presses a change button on the GUI, for example, when changing the image generation parameters.

The CPU 1401 determines whether the user operation is a press of the decision button or a change of the image generation parameters (step S1707). If the decision button is pressed, the CPU 1401 determines that image data desired by the user has been captured and terminates the resynthesis process.

If the user operation changes the image generation parameters, the CPU 1401 controls the digital signal processing unit 1408 to generate image data obtained by developing and synthesizing the RAW data set according to the image generation parameters specified by the user via the GUI (step S1708). The CPU 201 then returns the process to step S1706 to display the image represented by the resynthesized image data on the GUI.

The CPU 1401 determines, according to the determination at step S1707, whether or not the decision button has been pressed after the resynthesis process (step S1709). The CPU 1401, when determining at step S1709 that the decision button has been pressed after the resynthesis process, outputs the resynthesized image data by a process similar to that when outputting the initial image data (step S1710). The resynthesis process is then completed.

<Image synthesis process>

Among the development processes by the digital signal processing unit 1408, a process of synthesizing a plurality of RAW data (referred to as image synthesis process in the following) will be briefly described. In the image synthesis process of the present embodiment, an image having a desired depth of field and a zoom magnification ratio is synthesized by combining the synthetic aperture method which generates an image having a shallow depth of field from a multi-viewpoint image and electronic zooming.

As shown in Fig. 13, positions of the image-capturing units 1301 to 1369 are respectively different, and the RAW data set output from the image-capturing units 1301 to 1369 includes so-called multi-viewpoint images. A filtering process is performed on individual image data as necessary and, after the focus has been adjusted on a desired distance (referred to as focal distance in the following), the image data are summed up to generate a synthetic image having a shallow depth of field. Adjustment of the depth of field can be generally performed by changing the filter used for the filtering process, or changing the number of images used for synthesis. In addition, the amount of displacement required for matching of an image can be calculated from camera design parameters such as the position and direction of each image-capturing unit and image generation parameters such as the focal distance.

The electronic zooming process is generally an image resampling process. Occurrence of blur is common to a certain degree in the resampling process, according to the positional relation of pixels between the images before and after resampling. In order to reduce the influence of blur, it is preferred to use a plurality of images having the smallest angle of view among images having a wider angle of view than the angle of view corresponding to the zoom magnification ratio to be output. However, if reduction of noise is prioritized over reduction of the influence of blur, images having a plurality of angles of view other than those mentioned above may be used.

Both matching in the aperture synthesis process and the electronic zooming process are essentially a process of resampling and summing up images, and therefore they can be performed simultaneously. In other words, it suffices to perform resampling of images while considering the matching of the images. In this occasion, processing of a region outside the range of angles of view of the output images can be omitted. The resampling process generates a group of images which have been subject to matching and have a desired number of pixels at desired angles of view. An output image is acquired by further summing up the image group after having performed filtering processing thereon. When using images having a plurality of angles of view, weighting may be provided when summing up images in order to reduce the influence of blur. For example, the influence of blur can be reduced by providing a relatively lower weight to images having wider angles of view than the angle of view corresponding to the output image, i.e., images with a low resolution and blurred.

<Basic idea of embodiments>

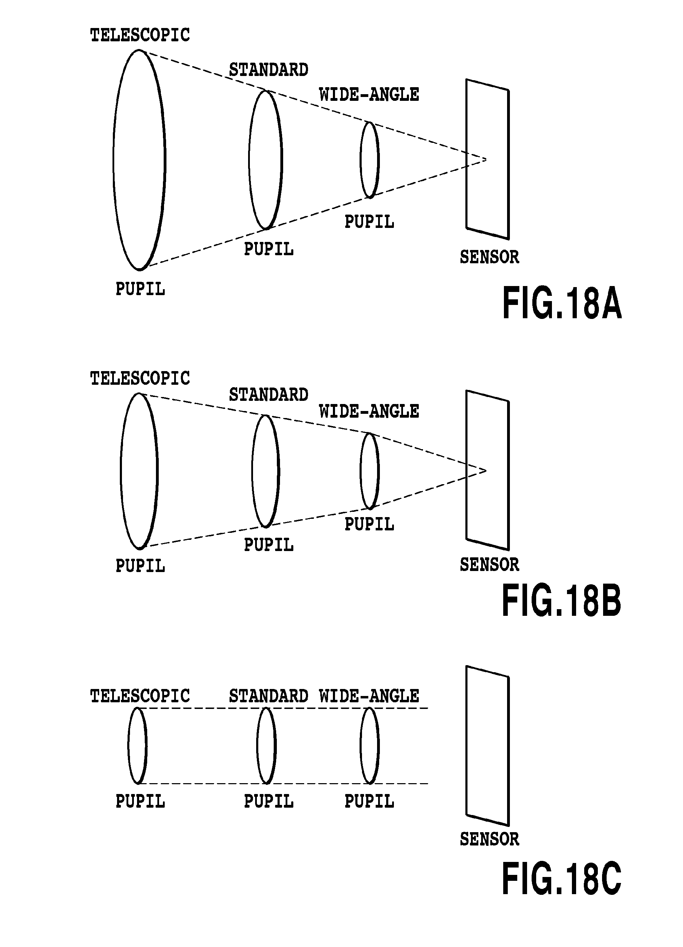

In the foregoing, the configuration of the Embodiment 4, the image-capturing process, and the overall process including the resynthesis process of image data after image-capturing have been described. In the following, the basic idea of the present embodiment will be described. Figs. 18A to 18C illustrate the relation between the angle of view, the focal distance, and the pupil diameter in an ordinary large-diameter zoom lens. Fig. 18A shows a case of a zoom lens in which the F number does not vary by zooming. Since the F number is a ratio of the focal distance against the pupil diameter, the pupil diameter increases in proportion to the focal distance if the F number is constant. Fig. 18B shows a case of a zoom lens in which the F number slightly increases as the telescopic side is approached. In this case too, the longer the focal distance is, the wider the pupil diameter becomes. Fig. 18C shows a case of a zoom lens in which the pupil diameter is constant regardless of zooming. In this case, since the F number is also proportional to the focal distance, 10-times zoom, for example, results in a 10-fold increase of the F number against the wide-angle end. As a zoom lens of a camera, those such as shown in Figs. 18A or 18B are common. Difference of the F number between the wide-angle end and the telescopic end of a commonly-used zoom lens with variable F numbers such as shown in Fig. 18B is about 1.7 times at most.

The depth of field of an image acquired with a camera, in other words, the size of blur at the position being out of focus depends on the size of the pupil. In brief, if the size of the pupil is reduced to 1/10th for the same angle of view, the size of blur is also reduced to 1/10th. Accordingly, in an image at the telescopic end of a 10-times zoom lens, for example, the size of blur of the image using the zoom lens shown in Fig. 18C turns out to be 1/10th the size of blur of an image using a commonly-used zoom lens shown in Fig. 18A. The wide-angle end can provide a size of blur similar to that shown in Fig. 18A, and therefore results in a poor balance of depth of field for a zoom lens such as that shown in Fig. 18C. Accordingly, a zoom lens such as that shown in Fig. 18C is not preferred as a lens for photographic usage. The foregoing is a case of a commonly-used single camera.

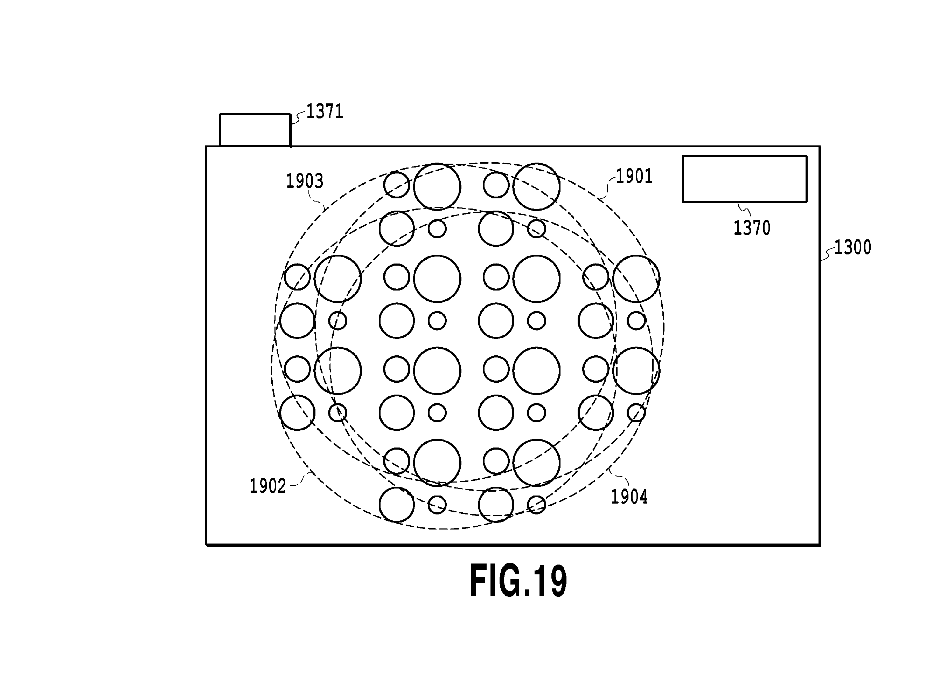

The same goes for a camera array that the size of blur depends on the size of the pupil. In the case of a camera array, it can be considered that several small cameras having small pupils gather to form a large pupil. Fig. 19 shows the appearance of a camera having a configuration in which a commonly-used camera array having single-focus cameras with different angles of view aligned therein is regarded as a single zoom camera, and further a plurality of which is arrayed. The circles drawn by solid lines in Fig. 19 indicate respective image-capturing units. The sizes of the circles indicate the difference of angles of view, larger circles indicate telescopic lenses. Four image-capturing units in a 2 × 2 matrix with different angles of view arranged form a single unit, which corresponds to a single zoom camera. The image-capturing device shown in Fig. 19 has 12 of such units arranged in a cross shape. Images with different zooms can thus be captured by changing the set of image-capturing units having a same angle of view. The circles drawn by dashed lines indicate the spread of image-capturing unit groups for each angle of view, with 1901 being the furthermost telescopic image-capturing unit group, 1902 being the image-capturing unit group having an angle of view with the next highest zoom magnification ratio. 1903 is the spread of the image-capturing unit group having an angle of view with the further next zoom magnification ratio, and 1904 indicates the spread of the image-capturing unit group having the widest angle of view. The spread of the groups of the image-capturing units corresponds to the size of pupils as shown in Figs. 18A to 18C. With the configuration of a common image-capturing unit shown in Fig. 19, spread of the image-capturing unit groups is approximately constant regardless of the angles of view, as shown by the configuration of Fig. 18C. In other words, the depths of field of this camera array are poorly balanced.

In order to provide a camera array with the balance of the depth of field associated with the zoom lens shown in Fig. 18A or 18B, it suffices to arrange cameras with narrower angles of view in a wider range so that a camera having a narrower angle of view has a larger effective pupil diameter. This is the basic idea of the present embodiment. For example, image-capturing units can be arranged so that a pupil diameter formed by one or more first image-capturing unit groups having a first angle of view becomes larger than a pupil diameter formed by one or more second image-capturing unit groups having a second angle of view which is wider than the first angle of view.

Here, as an example not shown in any of Figs. 18A to 18C, a case is conceivable in which the narrower the angle of view is, the smaller the F number becomes. Although it is very difficult to fabricate such a large diameter zoom lens, arranging cameras having narrow angles of view in a wider range in the camera array can make it possible to support such a zoom lens. Generally, a wide lens is usually used for shooting the scenery and thus may have a deep depth of field, a lens with a shallow depth of field is preferred in order to emphasize the subject, at angles of view in the range from the standard to the telescopic side. Accordingly, a lens having an F number at the telescopic side which is somewhat smaller than the F number at the wide-angle side is not very improper as a lens for photography.

<Configurations of image-capturing units and combination thereof>

In order to provide an inexpensive zoom function, the angles of view of the image-capturing units in the present embodiment are not all the same. For example, in the camera array having 69 lenses shown in Fig. 13, there are four types of angles of view of the image-capturing units 1301 to 1369, of which the image-capturing units 1301 to 1304, the image-capturing units 1305 to 1309, the image-capturing units 1310 to 1323, and the image-capturing units 1324 to 1369 have same angles of view, respectively. However, not all the image-capturing units 1301 to 1369 necessarily have an imaging sensor of a same size, even if their angles of view are identical. In other words, even if there are imaging sensors of different sizes, angles of view are the same according to distances which can be covered by the focal distance of the image-capturing unit. It is preferred that image-capturing units with a same angle of view have a same number of pixels to simplify image processing. In addition, the F numbers of respective image-capturing units may be different, and the sizes of lens of respective image-capturing units may be different. In the example of Fig. 13, angles of view are arranged in the order, from narrow to wide, of the image-capturing units 1301 to 1304, the image-capturing units 1305 to 1309, the image-capturing units 1310 to 1323, and the image-capturing units 1324 to 1369.

In the present embodiment, as shown in Fig. 13, image-capturing units with narrower angles of view are arranged in a wider range. The range in which the image-capturing units are arranged can be evaluated by the standard deviation ($\sigma_{xj}$, $\sigma_{yj}$) of the positions of image-capturing units having the same angle of view from the center of gravity. Letting ($x_{ji}$, $y_{ji}$) be the position of the i-th image-capturing unit having angle of view j, the center of gravity ($x_{gj}$, $y_{gj}$) of the position of the image-capturing unit having the angle of view j can be calculated as follows.

$$x_{gj} = \frac{1}{N_j} \sum_i^{N_j} x_{ji} \qquad \text{Equation (12)}$$

$$y_{gj} = \frac{1}{N_j} \sum_i^{N_j} y_{ji} \qquad \text{Equation (13)}$$

The standard deviation ($\sigma_{xj}$, $\sigma_{yj}$) can be calculated by the following equation.

$$\sigma_{xj} = \sqrt{\frac{1}{N_j} \sum_i^{N_j} (x_{ji} - x_{gj})^2} \qquad \text{Equation (14)}$$

$$\sigma_{yj} = \sqrt{\frac{1}{N_j} \sum_i^{N_j} (y_{ji} - y_{gj})^2} \qquad \text{Equation (15)}$$

The standard deviation, an amount having a dimension of length, correlates with the size of the pupil formed by all the plurality of image-capturing units having the angle of view j. Therefore, the image-capturing units are arranged so that the narrower the angle of view j is, the larger respective standard deviations ($\sigma_{xj}$, $\sigma_{yj}$) become. In addition, since the shape of the pupil of a normal camera is usually circular or polygonal, arrangement of image-capturing units is preferred to be approximately circular or polygonal, too. If, on the contrary, the image-capturing units are linearly arranged, it is undesirable in that images after synthesis are susceptive to noise. In other words, it is desirable that the image-capturing units are aligned so that the correlation coefficient of positions $x_{ji}$ and $y_{ji}$ of the image-capturing unit becomes small. Here, it is assumed that the x-axis and the y-axis used for a calculation of the center of gravity or the standard deviation are orthogonal to each other.

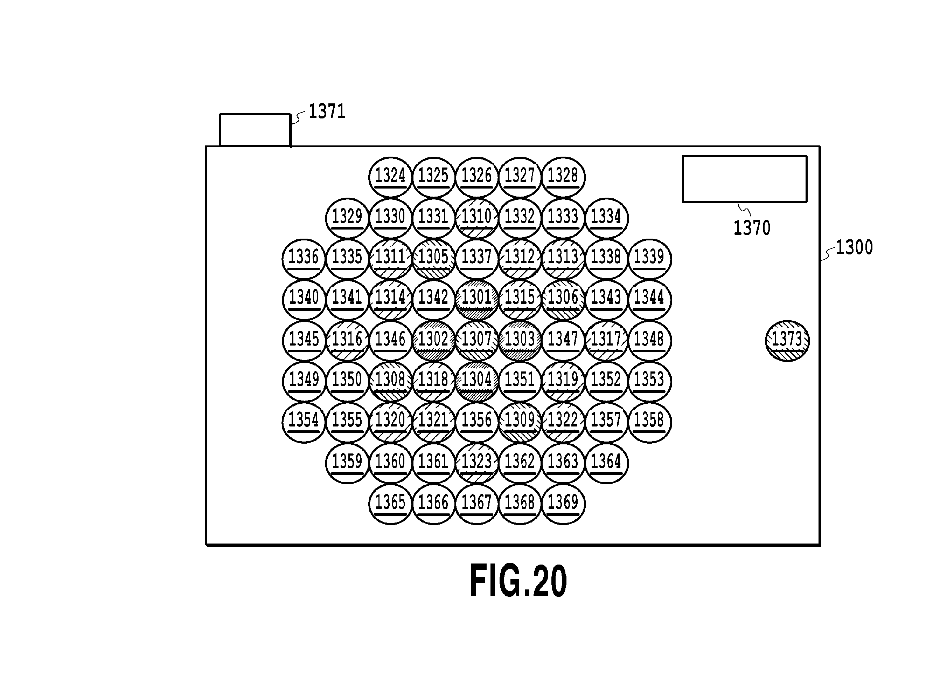

In addition, as shown in Fig. 20, there is a case of installing the image-capturing unit 1373 at a position slightly separated with other image-capturing units for mainly generating 3D images or measuring distances. There may be a case where images captured by the image-capturing unit 1373 are not directly used for the aperture synthesis process, or only added to the output image with a very small weight. In such a case, it is preferred to remove the image-capturing unit 1373 from calculation of the center of gravity. In other words, even if the image-capturing unit 1373 is arranged as shown in Fig. 20, for example, it is not necessary to consider existence of the image-capturing unit 1373 when its influence on the image to be synthesized is slight. In other words, an aspect, if any, such as that shown in Fig. 20, for example, can be included in the category of the present embodiment.

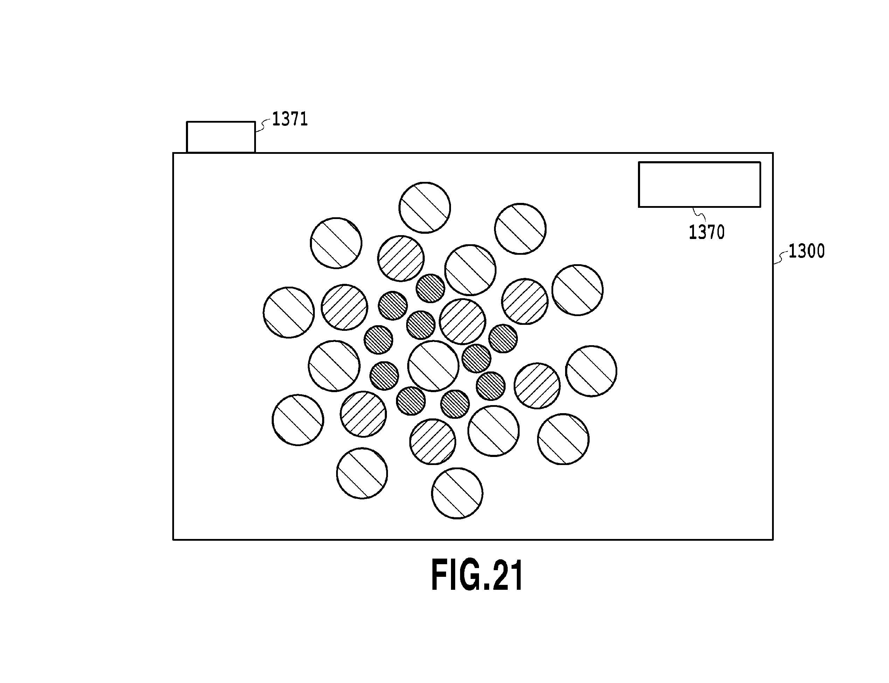

In addition, respective image-capturing units need not be arranged on a lattice as shown in Fig. 13, and may be arranged at random as shown in Fig. 21. The circles in Fig. 21 express respective image-capturing units, a larger circle expressing a wider angle of view of an image-capturing unit.

As has been described above, by arranging image-capturing units with narrower angles of view in a wider range to make the effective size of pupil to be larger at the telescopic side, the effective F number can be made smaller than or approximately the same at the telescopic side rather than the wide-angle side. Accordingly, images having a depth of field which is similar to a common zoom lens can be provided, whereby it is possible to solve the problem that the depth of field at the telescopic side is deeper and the balance of depth of field is poorer than at the wide-angle side.

(Other embodiments)

In addition, the present invention can also be implemented by performing the following process. That is, a process in which software (program) that implements the functions of the above-mentioned embodiments is provided to a system or a device via a network or various storage media, and a computer (CPU, MPU, or the like) of the system or the device reads end executes the program.

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer, for example via a network or from a recording medium of various types serving as the memory device (e.g., computer-readable medium).

While the present invention has been described with reference to embodiments, it is to be understood that the invention is not limited to the disclosed embodiments.

STATEMENTS

1. An image-capturing device (100) comprising a plurality of image-capturing units (101 to 161), wherein a number of image-capturing units (130 to 161) having a first angle of view, among the plurality of image-capturing units, is larger than a number of one or more other image-capturing units (101 to 105) having an angle of view wider than the first angle of view.

2. The image-capturing device according to statement 1, wherein an amount of light being received in total by one or more image-capturing units having a first angle of view, among the plurality of image-capturing units, is approximately equal to an amount of light being received in total by one or more image-capturing units having a second angle of view which is another angle of view.

3. An image processing apparatus (100) comprising a generating unit (208) configured to generate image data by synthesizing captured data obtained from an image-capturing device (100) as claimed in claim 1.

4. The image processing apparatus according to statement 3, wherein an amount of light received in total by captured data obtained from one or more image-capturing units having a first angle of view, among the plurality of image-capturing units, is approximately equal to an amount of light received in total by captured data obtained from one or more image-capturing units having a second angle of view which is another angle of view.

5. An image-capturing device (100) comprising a plurality of image-capturing units (101 to 161), wherein an amount of light being received in total by one or more image-capturing units (130 to 161) having a first angle of view, among the plurality of image-capturing units, is approximately equal to an amount of light being received in total by one or more image-capturing units (101 to 105) having a second angle of view which is another angle of view.

6. The image-capturing device according to statement 5 further comprising:

an image-capturing parameter acquisition unit configured to acquire image-capturing parameters in respective image-capturing units related to an amount of light being received; and
a control unit configured to perform control to make an amount of light received in total by the image-capturing units having the first angle of view approximately equal to an amount of light being received in total by the image-capturing units having the second angle of view, by changing an image-capturing parameter in the image-capturing units having the acquired first angle of view.

7. The image-capturing device according to statement 6, wherein the control by the control unit is performed when an image-capturing parameter in the image-capturing unit having the second angle of view is changed.

8. The image-capturing device according to statement 6, wherein the image-capturing parameters include at least one of values indicating diaphragm and focus.

9. An image processing apparatus (100) comprising a generating unit (208) configured to generate image data by synthesizing captured data obtained from a plurality of image-capturing units (101 to 161), wherein an amount of light received in total by captured data obtained from one or more image-capturing units (130 to 161) having a first angle of view, among the plurality of image-capturing units, is approximately equal to an amount of light received in total by captured data obtained from one or more image-capturing units (101 to 105) having a second angle of view which is another angle of view.

10. The image processing apparatus according to statement 9 further comprising:

an image-capturing parameter acquisition unit configured to acquire image-capturing parameters in respective image-capturing units related to an amount of light being received; and
a control unit configured to perform control to make an amount of light received in total by captured data obtained from one or more image-capturing units having a first angle of view, among the plurality of image-capturing units, approximately equal to an amount of light received in total by captured data obtained from one or more image-capturing units having a second angle of view which is another angle of view, by changing an image-capturing parameter in the image-capturing units having the acquired first angle of view.

11. The image processing apparatus according to statement 10, wherein the control by the control unit is performed when an image-capturing parameter in the image-capturing unit having the second angle of view is changed.

12. The image processing apparatus according to statement 10, wherein the image-capturing parameters include at least one of values indicating diaphragm and focus.

13. An image processing apparatus (100) comprising:

a captured data acquisition unit (208) configured to acquire a plurality of captured data obtained from a plurality of image-capturing units (101 to 161);
a selecting unit (208) configured to select a first captured data set from the acquired plurality of captured data so that an amount of light being received in total by image-capturing units which have captured the acquired first captured data set is approximately equal to an amount of light being received in total by image-capturing units which have captured a second captured data set which is different from the first captured data set; and
a generating unit (208) configured to generate image data by synthesizing captured data of the selected first captured data set.

14. An image processing method comprising a step of generating image data by synthesizing captured data obtained from a plurality of image-capturing units, wherein a number of one or more image-capturing units having a first angle of view, among the plurality of image-capturing units, is larger than a number of one or more image-capturing units having an angle of view wider than the first angle of view.

15. An image processing method comprising a step of generating image data by synthesizing captured data obtained from a plurality of image-capturing units, wherein an amount of light received in total by captured data obtained from one or more image-capturing units having a first angle of view, among the plurality of image-capturing units, is approximately equal to an amount of light received in total by captured data obtained from one or more image-capturing units having a second angle of view which is another angle of view.

16. An image processing method comprising the steps of:

acquiring a plurality of captured data obtained from a plurality of image-capturing units;
selecting a first captured data set from the acquired plurality of captured data so that an amount of light being received in total by image-capturing units which have captured the acquired first captured data set is approximately equal to an amount of light being received in total by the image-capturing units which have captured a second captured data set which is different from the first captured data set; and
generating image data by synthesizing captured data of the selected first captured data set.

17. A program on a non-transitory computer-readable storage medium, the program causing a computer to execute the image processing method according to statement 15.

18. A program on a non-transitory computer-readable storage medium, the program causing a computer to execute the image processing method according to statement 16.

19. An image-capturing device (1300) comprising a plurality of image-capturing units (1301 to 1369), wherein the plurality of image-capturing units is arranged so that a pupil diameter formed by one or more first image-capturing unit groups (1324 to 1369) having a first angle of view, among the image-capturing units, is larger than a pupil diameter formed by one or more second image-capturing unit groups (1301 to 1304) having a second angle of view wider than the first angle of view.

20. An image-capturing device comprising a plurality of image-capturing units, wherein the plurality of image-capturing units is arranged so that a pupil diameter formed by one or more first image-capturing unit groups having a first angle of view, among the image-capturing units, is smaller than a pupil diameter formed by one or more second image-capturing unit groups having a second angle of view narrower than the first angle of view.

21. An image-capturing device (1300) comprising a plurality of image-capturing units (1301 to 1369), wherein one or more first image-capturing unit groups (1324 to 1369) having a first angle of view, among the image-capturing units, are arranged in a region wider than one or more second image-capturing unit groups (1301 to 1304) having a second angle of view wider than the first angle of view.

22. An image-capturing device (1300) comprising a plurality of image-capturing units (1301 to 1369), wherein one or more first image-capturing unit groups (1301 to 1304) having a first angle of view, among the image-capturing units, are arranged in a region narrower than one or more second image-capturing unit groups (1324 to 1369) having a second angle of view narrower than the first angle of view.

23. An image-capturing device (1300) comprising a plurality of image-capturing units (1301 to 1369), wherein the plurality of image-capturing units is arranged so that standard deviation from a center of gravity of one or more first image-capturing unit groups (1324 to 1369) having a first angle of view, among the image-capturing units, is larger than standard deviation from a center of gravity of one or more second image-capturing unit groups (1301 to 1304) having a second angle of view wider than the first angle of view.

24. An image-capturing device (1300) comprising a plurality of image-capturing units (1301 to 1369), wherein the plurality of image-capturing units is arranged so that standard deviation from a center of gravity of one or more first image-capturing unit groups (1324 to 1369) having a first angle of view, among the image-capturing units, is smaller than standard deviation from a center of gravity of one or more second image-capturing unit groups (1301 to 1304) having a second angle of view narrower than the first angle of view.

25. The image-capturing device according to statement 19, wherein the plurality of image-capturing units is arranged in a circular shape.

26. The image-capturing device according to statement 19, wherein the plurality of image-capturing units is arranged in a polygonal shape.

27. The image-capturing device according to statement 25, wherein the plurality of image-capturing units is arranged so that mutual correlation coefficients become small.

28. The image-capturing device according to statement 19, further comprising a synthesis unit configured to synthesize a plurality of captured data which has been captured by the plurality of image-capturing units.

**Claims**

1. An image-capturing device (1300) comprising a plurality of image-capturing units (1301 to 1369), wherein one or more first image-capturing unit groups (1324 to 1369) having a first angle of view, among the image-capturing units, are arranged in a region wider than one or more second image-capturing unit groups (1301 to 1304) having a second angle of view wider than the first angle of view.

2. The image-capturing device according to claim 1, wherein

one or more first image-capturing unit groups (1301 to 1304) having a first angle of view, among the image-capturing units, are arranged in a region narrower than one or more second image-capturing unit groups (1324 to 1369) having a second angle of view narrower than the first angle of view.

3. The image-capturing device according to claim 1 or 2, wherein
the plurality of image-capturing units is arranged so that a pupil diameter formed by one or more first image-capturing unit groups (1324 to 1369) having a first angle of view, among the image-capturing units, is larger than a pupil diameter formed by one or more second image-capturing unit groups (1301 to 1304) having a second angle of view wider than the first angle of view.

4. The image-capturing device according to claims 1 to 3, wherein
the plurality of image-capturing units is arranged so that a pupil diameter formed by one or more first image-capturing unit groups having a first angle of view, among the image-capturing units, is smaller than a pupil diameter formed by one or more second image-capturing unit groups having a second angle of view narrower than the first angle of view.

5. The image-capturing device according to claims 1 to 4, wherein
the plurality of image-capturing units is arranged so that standard deviation from a center of gravity of one or more first image-capturing unit groups (1324 to 1369) having a first angle of view, among the image-capturing units, is larger than standard deviation from a center of gravity of one or more second image-capturing unit groups (1301 to 1304) having a second angle of view wider than the first angle of view.

6. The image-capturing device according to claims 1 to 5, wherein
the plurality of image-capturing units is arranged so that standard deviation from a center of gravity of one or more first image-capturing unit groups (1324 to 1369) having a first angle of view, among the image-capturing units, is smaller than standard deviation from a center of gravity of one or more second image-capturing unit groups (1301 to 1304) having a second angle of view narrower than the first angle of view.

7. The image-capturing device according to claims 1 to 6, wherein the plurality of image-capturing units is arranged in a circular shape.

8. The image-capturing device according to claims 1 to 7, wherein the plurality of image-capturing units is arranged in a polygonal shape.

9. The image-capturing device according to claims 1 to 8, wherein the plurality of image-capturing units is arranged so that mutual correlation coefficients become small.

10. The image-capturing device according to claims 1 to 9, further comprising a synthesis unit configured to synthesize a plurality of captured data which has been captured by the plurality of image-capturing units.

11. An image processing method comprising the steps of:

acquiring a plurality of captured data obtained from a plurality of image-capturing units, wherein one or more first image-capturing unit groups (1324 to 1369) having a first angle of view, among the image-capturing units, are arranged in a region wider than one or more second image-capturing unit groups (1301 to 1304) having a second angle of view wider than the first angle of view; and
generating image data by synthesizing acquired a plurality of captured data.

12. A program on a non-transitory computer-readable storage medium, the program causing a computer to execute the image processing method according to claim 11.

FIG.1

IMAGE-CAPTURING UNIT ~101

~200

CPU ~201

RAM ~202

ROM ~203

IMAGE-CAPTURING UNIT ~102

DISPLAY CONTROL UNIT ~204

MONITOR ~213

I/F ~205

MEDIUM ~206

CG GENERATING UNIT ~207

DIGITAL SIGNAL PROCESSING UNIT ~208

OPTICAL SYSTEM CONTROL METHOD GENERATING UNIT ~209

OPTICAL SYSTEM CONTROL UNIT ~210

IMAGE GENERATION PARAMETER GENERATING UNIT ~211

COMPRESSION/DECOMPRESSION UNIT ~212

IMAGE-CAPTURING UNIT ~161

FLASH ~162

SHOOT BUTTON ~163

OPERATION UNIT ~164

~100

# FIG.2

EP 2 592 823 A2

FIG.3

26

START

WHICH USER OPERATION? — S101

SHOOTING OPERATION

CHANGE SETTING OF IMAGE-CAPTURING OPTICAL SYSTEM — S102

CALCULATE SETTING VALUES OF OPTICAL SYSTEM OF EACH IMAGE-CAPTURING UNIT BY OPTICAL SYSTEM CONTROL METHOD GENERATING UNIT, BASED ON USER SETTING

— S103

CHANGE STATUS OF RESPECTIVE LENS GROUPS AND DIAPHRAGMS OF IMAGE-CAPTURING UNIT, BASED ON SETTING VALUES CALCULATED IN OPTICAL SYSTEM CONTROL METHOD GENERATING UNIT

— S104

RECEIVE IMAGE-CAPTURING PARAMETERS FROM IMAGE-CAPTURING OPTICAL SYSTEM CONTROL UNIT

— S105

CONTROL IMAGE-CAPTURING OPTICAL SYSTEM CONTROL UNIT TO PERFORM EXPOSURE

— S106

STORE RAW DATA SET IN STORAGE UNIT

— S107

ACQUIRE IMAGE GENERATION PARAMETERS

— S108

CONTROL DIGITAL SIGNAL PROCESSING UNIT TO PERFORM PROCESSING OF RAW DATA SET

— S109

STORE INITIAL IMAGE DATA AND RAW DATA SET IN STORAGE UNIT

— S110

CONTROL COMPRESSION/DECOMPRESSION UNIT TO PERFORM ENCODING PROCESS OF INITIAL IMAGE DATA

— S111

OUTPUT ENCODED DATA AND RAW DATA SET

END

FIG.4

START

MAGNIFICATION RATIO CHANGING
PROCESS INSTRUCTED? ⌐S501

NO

YES

ACQUIRE IMAGE DATA SPECIFIED BY USER
AND CORRESPONDING RAW DATA ⌐S502

STORE IMAGE DATA AND RAW DATA IN RAM ⌐S503

READ IMAGE-CAPTURING PARAMETERS, CAMERA DESIGN PARAMETERS,
AND IMAGE GENERATION PARAMETERS ⌐S504

ACQUIRE RANGE IN WHICH
IMAGE GENERATION PARAMETERS CAN BE CHANGED ⌐S505

DISPLAY GUI ON MONITOR ⌐S506

WHICH USER OPERATION? ⌐S507  DECIDED

CHANGE ZOOM
MAGNIFICATION RATIO ⌐S508

CONTROL DIGITAL SIGNAL PROCESSING UNIT TO GENERATE
REDEVELOPED IMAGE DATA OBTAINED BY DEVELOPING RAW DATA
SET ACCORDING TO PARAMETERS SPECIFIED BY USER

DECISION BUTTON PRESSED
AFTER MAGNIFICATION RATIO
CHANGING PROCESS? ⌐S509  NO

YES

OUTPUT REDEVELOPED IMAGE DATA ⌐S510

END

# FIG.5

28

FIG.6A

601 602 603

604
605
606

607
608
609

FIG.6B

607
608
609
610

701

702

703

# FIG.7

FIG.8

EP 2 592 823 A2

START

OTHER THAN
SETTING
CHANGE OF
IMAGE-CAPTURING
OPTICAL SYSTEM

S901

WHICH USER OPERATION?

SETTING CHANGE OF
IMAGE-CAPTURING
OPTICAL SYSTEM

S902

CAUSE OPTICAL SYSTEM CONTROL METHOD GENERATING
UNIT TO CALCULATE SETTINGS OF OPTICAL SYSTEM OF
EACH IMAGE-CAPTURING UNIT SO THAT EVALUATION
VALUES $E_j$ ARE APPROXIMATELY THE SAME,
AND ACQUIRE RESULT

S903

CHANGE STATUS OF RESPECTIVE LENS GROUPS AND
DIAPHRAGMS OF IMAGE-CAPTURING UNITS,
BASED ON SETTING VALUES CALCULATED BY
OPTICAL SYSTEM CONTROL METHOD GENERATING UNIT

S904

RECEIVE IMAGE-CAPTURING PARAMETERS FROM
IMAGE-CAPTURING OPTICAL SYSTEM CONTROL UNIT

END

FIG.9

DESIGN PARAMETER
STORAGE UNIT ⟋1001

IMAGE-CAPTURING
PARAMETER
STORAGE UNIT ⟋1002

⟋209

·ANGLE OF
VIEW

·DIAPHRAGM
·FOCUS

EVALUATION VALUE
CALCULATION UNIT ⟋1003

·EVALUATION VALUE $E_j$

IMAGE-CAPTURING
PARAMETER
CALCULATION UNIT ⟋1004

·DIAPHRAGM
·FOCUS

# FIG.10

**FIG.11**

EP 2 592 823 A2

EP 2 592 823 A2

LARGE ANGLE OF VIEW

SMALL ANGLE OF VIEW

| IMAGE-CAPTURING UNIT NUMBER | IMAGE-CAPTURING UNIT ANGLE OF VIEW (FOCAL DISTANCE CONVERTED INTO 35 mm) | OUTPUT IMAGE ANGLE OF VIEW (FOCAL DISTANCE CONVERTED INTO 35 mm) & ZOOM MAGNIFICATION RATIO | | | | |
|---|---|---|---|---|---|---|
| | | 24mm ×1.0 | 30mm ×1.25 | 40mm ×1.67 | 50mm ×2.0 | 60mm ×2.5 |
| 1 | 24mm | | | | | |
| 2 | 24mm | | | | | |
| 3 | 24mm | | | | | |
| 4 | 24mm | | | | | |
| 5 | 26mm | | | | | |
| 6 | 27mm | | | | | |
| 7 | 29mm | | | | | |
| 8 | 31mm | | | | | |
| 9 | 34mm | | | | | |
| 10 | 36mm | | | | | |
| 11 | 39mm | | | | | |
| 12 | 41mm | | | | | |
| 13 | 44mm | | | | | |
| 14 | 47mm | | | | | |
| 15 | 47mm | | | | | |
| 16 | 47mm | | | | | |
| 17 | 47mm | | | | | |
| 18 | 47mm | | | | | |

FIG.12

FIG.13

EP 2 592 823 A2

1300

1301 IMAGE-CAPTURING UNIT

1400

CPU 1401

RAM 1402

ROM 1403

1302 IMAGE-CAPTURING UNIT

DISPLAY CONTROL UNIT 1404 ← MONITOR 1413

I/F 1405 ← MEDIUM 1406

CG GENERATING UNIT 1407

DIGITAL SIGNAL PROCESSING UNIT 1408

OPTICAL SYSTEM CONTROL METHOD GENERATING UNIT 1409

OPTICAL SYSTEM CONTROL UNIT 1410

IMAGE GENERATION PARAMETER GENERATING UNIT 1411

COMPRESSION/ DECOMPRESSION UNIT 1412

1369 IMAGE-CAPTURING UNIT

FLASH 1370

SHOOT BUTTON 1371

OPERATION UNIT 1372

FIG.14

FIG.15

START

S1601    SHOOTING
              OPERATION
WHICH USER OPERATION?

CHANGE SETTING OF IMAGE-CAPTURING
OPTICAL SYSTEM    S1602

CALCULATE SETTING VALUES OF OPTICAL SYSTEM OF EACH
IMAGE-CAPTURING UNIT BY OPTICAL SYSTEM CONTROL METHOD
GENERATING UNIT, BASED ON USER SETTING

S1603

CHANGE STATUS OF RESPECTIVE LENS GROUPS AND DIAPHRAGMS OF
IMAGE-CAPTURING UNIT, BASED ON SETTING VALUES CALCULATED
IN OPTICAL SYSTEM CONTROL METHOD GENERATING UNIT

S1604

RECEIVE IMAGE-CAPTURING PARAMETERS FROM
IMAGE-CAPTURING OPTICAL SYSTEM CONTROL UNIT

S1605

CONTROL IMAGE-CAPTURING OPTICAL SYSTEM CONTROL UNIT
TO PERFORM EXPOSURE

S1606

STORE RAW DATA SET IN STORAGE UNIT

S1607

ACQUIRE IMAGE GENERATION PARAMETERS

S1608

CONTROL DIGITAL SIGNAL PROCESSING UNIT
TO PERFORM PROCESSING OF RAW DATA SET

S1609

STORE INITIAL IMAGE DATA AND RAW DATA SET IN STORAGE UNIT

S1610

CONTROL COMPRESSION/DECOMPRESSION UNIT TO PERFORM
ENCODING PROCESS OF INITIAL IMAGE DATA

S1611

OUTPUT ENCODED DATA AND RAW DATA SET

END    FIG.16

START

RESYNTHESIS PROCESS INSTRUCTED? ⟋S1701

NO

YES

ACQUIRE IMAGE DATA SPECIFIED BY USER
AND CORRESPONDING RAW DATA ⟋S1702

STORE IMAGE DATA AND RAW DATA IN RAM ⟋S1703

READ IMAGE-CAPTURING PARAMETERS, CAMERA DESIGN PARAMETERS,
AND IMAGE GENERATION PARAMETERS ⟋S1704

ACQUIRE RANGE IN WHICH
IMAGE GENERATION PARAMETERS CAN BE CHANGED ⟋S1705

DISPLAY GUI ON MONITOR ⟋S1706

WHICH USER OPERATION? ⟋S1707

DECIDED

CHANGE IMAGE
GENERATION PARAMETER ⟋S1708

CONTROL DIGITAL SIGNAL PROCESSING UNIT TO GENERATE
RESYNTHESIZED IMAGE DATA OBTAINED BY PERFORMING SYNTHESIS
PROCESS ON RAW DATA ACCORDING TO
IMAGE GENERATION PARAMETERS SPECIFIED BY USER

DECISION BUTTON
PRESSED AFTER RESYNTHESIS PROCESS? ⟋S1709

NO

YES

OUTPUT RESYNTHESIZED IMAGE DATA ⟋S1710

END

FIG.17

TELESCOPIC

STANDARD

WIDE-ANGLE

PUPIL

PUPIL

PUPIL

SENSOR

**FIG.18A**

TELESCOPIC

STANDARD

WIDE-ANGLE

PUPIL

PUPIL

PUPIL

SENSOR

**FIG.18B**

TELESCOPIC   STANDARD   WIDE-ANGLE

PUPIL         PUPIL      PUPIL

SENSOR

**FIG.18C**

FIG.19

FIG.20

EP 2 592 823 A2

**FIG.21**

EP 2 592 823 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005109623 A

### Non-patent literature cited in the description

- High performance imaging using large camera arrays. *ACM Transactions on Graphics - Proceedings of ACM SIGGRAPH,* 2005